# EUROPEAN PATENT SPECIFICATION

(11) **EP 2 763 476 B1**
(45) Date of publication and mention of the grant of the patent: **30.10.2019**
(21) Application number: 12836016.1
(22) Date of filing: 24.09.2012
(51) Int. Cl.: H04W 60/06, H04W 8/02

(54) **MOBILE COMMUNICATION NETWORK SYSTEM, COMMUNICATION CONTROL METHOD, AND NON-TEMPORARY COMPUTER-READABLE MEDIUM STORING PROGRAM THEREFOR**
MOBILES KOMMUNIKATIONSNETZSYSTEM, KOMMUNIKATIONSSTEUERUNGSVERFAHREN UND NICHT TEMPORÄRES COMPUTERLESBARES MEDIUM MIT DARAUF GESPEICHERTEM PROGRAMM
SYSTÈME DE RÉSEAU DE COMMUNICATION MOBILE, PROCÉDÉ DE COMMANDE DE COMMUNICATION, ET SUPPORT LISIBLE PAR ORDINATEUR NON TEMPORAIRE STOCKANT UN PROGRAMME CORRESPONDANT

(30) Priority: 29.09.2011 JP 2011214409
(43) Date of publication of application: 06.08.2014
(73) Proprietor: NEC Corporation, Tokyo 108-8001 (JP)
(72) Inventor: IWAI, Takanori, Tokyo 1088001 (JP); SHOJI, Takuya, Tokyo 1088001 (JP)
(74) Representative: MacDougall, Alan John Shaw
(86) International application number: PCT/JP2012/006042
(87) International publication number: WO 2013/046620

(56) References cited:
- WO-A1-2004/089026
- WO-A1-2005/043860
- JP-A- 2000 316 179
- JP-A- 2002 209 247
- US-A1- 2009 086 667
- "Delayed TBF Release", 3GPP TSG GERAN ADHOC, XX, XX, no. #3, 11 December 2000 (2000-12-11), pages 1-3, XP002293157,
- ERICSSON ET AL: "Clarification on the UE state after fast dormancy request", 3GPP DRAFT; R2-096625, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Jeju; 20091109, 9 November 2009 (2009-11-09), XP050391167, [retrieved on 2009-11-03]
- MOTOROLA: "Standalone Carrier for MBMS", 3GPP DRAFT; R2-062347-STANDALONE-MBMS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Tallinn; 20060823, 23 August 2006 (2006-08-23), XP050131939, [retrieved on 2006-08-23]
- VODAFONE ET AL: "UE Fast Dormancy Behaviour", 3GPP DRAFT; R2-074848, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Jeju; 20071112, 12 November 2007 (2007-11-12), XP050137356, [retrieved on 2007-11-12]

## Description

### Technical Field

The present invention relates to a mobile communication network system, a communication control method, and a mobile terminal attach/detach processing program and, in particular, to a mobile communication network system, a communication control method, and a mobile terminal attach/detach processing program that make it possible to decrease a load of a core network (core node) side at the time of attach/detach to the core network of a mobile terminal (radio communication terminal).

### Background Art

Progress of a radio communication technology in recent years is remarkable, and various standards have been energetically established in the 3GPP (Third Generation Partnership Project) also regarding a 3G (Third Generation) system and a more advanced mobile communication network system. Furthermore, as described in Japanese Unexamined Patent Application Publication No. 2009-246772 of Patent Literature 1 "MOBILE MANAGEMENT DEVICE AND RADIO COMMUNICATION BASE STATION DEVICE", and Published Japanese Translation of PCT International Publication for Patent Application, No. 2009-516399 of Patent Literature 2 "RADIO COMMUNICATION SYSTEM AND METHOD FOR IMPLEMENTING ADVANCED SYSTEM, ATTACH PROCESSING PROCEDURE", etc., trials to achieve high-speed and large-volume packet communication as a mobile communication network system based on a 3GPP standard have been actively performed.

In such circumstances, when a large amount of mobile terminals (radio communication terminals), such as mobile phones and M2Ms (Machine-to-Machine or Machine-to-Management), exist on a network, an attach/detach request that requests connection/opening with the network is performed to a core network side from the large amount of mobile terminals (radio communication terminals) on the network. When such request is frequently generated, significant loads are applied to the core network and a core node, and congestion and a device failure may be caused.

Meanwhile, a case also exists where depending on applications of terminals such as the M2M, positional movement is not performed and update of session information is not needed each time. Accordingly, in such case, it is necessary to take measures so that the loads of the core network and the core node are decreased by reducing attach/detach processing to thereby decrease generation factors of the congestion and the device failure of the core network and the core node.

"Delayed TBF Release", 3GPP TSG GERAN ADHOC #3, 11 December 2000, pages 1 - 3 discloses a method to modify the TBF release procedure by introducing a delay to the TBF release for a short period (e.g. 0.5 - 5 sec) after a transmission buffer becomes empty, such that unnecessary TBF establishments and releases are avoided.

US 2009/086667 discloses a method, apparatus and computer program product for preserving a signaling connection after a network has indicated that the signaling connection can be closed, such as by selection of a no follow on proceed mode during routing area updates or attach procedures. By preserving the signaling connection, subsequent communications between the network and the user equipment can be completed without closing and then subsequently reopening the signaling connection.

"Clarification on the UE state after fast dormancy request", 3GPP Draft; R2-096625, 9 November 2009, pages 1 - 5 discloses that that fast dormancy is another trigger to initiate signaling connection release indication (SCRI). When the UE initiates SCRI with special cause "UE Requested PS Data session end", it shall not locally release the PS signaling connection and keep the locally stored information. Accordingly, the UE may locally release the PS signaling connection, while the network switches the UE to another RRC connected mode state, after SCRI with special cause "UE Requested PS Data session end".

WO 2005/043860 discloses techniques for conserving network resources in a network that initiates data services by communicating push data to a dormant terminal. Selected network resources associated with the dormant terminal are released, and maintained information for reaching the dormant terminal is updated when the point of network attachment of the dormant terminal changes.

### Citation List

### Patent Literature

Patent Literature 1: Japanese Unexamined Patent Application Publication No. 2009-246772 (Pages 4 to 9)
Patent Literature 2: Published Japanese Translation of PCT International Publication for Patent Application, No. 2009-516399 (Pages 9 to 12)

### Summary of Invention

### Technical Problem

However, in a related art, there has not existed a processing reduction technique in consciousness of a load of attach/detach processing. That is, in conventional processing of a core network side, processing was uniformly performed to mobile terminals (radio communication terminals) that were performing attach and detach as positional movement being performed regarding all the mobile terminals (radio communication terminals) without being conscious of features of the mobile terminals (radio communication terminals).

However, as mentioned above, there also exists a mobile terminal (radio communication terminal) that is not moved, and performs the attach/detach request only approximately once a day. Conventionally, as for the processing of the core network side, the same processing has been repeated also to such mobile terminal (radio communication terminal) each time in each case, and loads have been uselessly applied to the core network and the core node.

### (Object of Invention)

The present invention has been made in view of such circumstances, and an object thereof is to provide a mobile communication network system, a communication control method, and a mobile terminal attach/detach processing program that make it possible to decrease a load of a core network side at the time of attach/detach of a mobile terminal.

### Solution to Problem

In order to solve the above-mentioned problem, the following characteristic configurations are mainly employed in a mobile communication network system, a communication control method, and a mobile terminal attach/detach processing program according to the present invention as set out in the appended claims.
(1) A mobile communication network system according to the present invention that is provided with a core network accessed from a mobile terminal through a radio line is characterized in that a mobile management node arranged on a core network side in order to perform management control of mobile communication omits detach processing of the core network side in receiving a detach request signal that requests detach from the mobile terminal, releases the radio line in a state of holding as it is a communication session of the core network side set in the mobile terminal previously having attached, after that, omits attach processing of the core network side in receiving an attach request signal that requests attach from the mobile terminal, uses as it is the communication session of the core network side held regarding the mobile terminal, and sets the radio line.
(2) A communication control method according to the present invention is a mobile terminal attach/detach processing method in a case where requests of attach and detach are made from a mobile terminal to a core network in a mobile communication network system provided with the core network accessed from the mobile terminal through a radio line, and the communication control method is characterized in that a mobile management node arranged on a core network side in order to perform management control of mobile communication omits detach processing of the core network side in receiving a detach request signal that requests detach from the mobile terminal, releases the radio line in a state of holding as it is a communication session of the core network side set in the mobile terminal previously having attached, after that, omits attach processing of the core network side in receiving an attach request signal that requests attach from the mobile terminal, uses as it is the communication session of the core network side held regarding the mobile terminal, and sets the radio line.
(3) A communication control program according to the present invention is characterized by carrying out at least the communication control method described in the above (2) as a program executable by a computer with which the mobile management node is provided.

### Advantageous Effects of Invention

According to the mobile communication network system, the mobile terminal attach/detach processing method, and the mobile terminal attach/detach processing program of the present invention, the following effects can be exerted.

Namely, since the present invention makes it possible to omit the attach/detach processing of the mobile terminal on the core network side depending on a parameter added in addition to the attach/detach request signal, it becomes possible to decrease the load of the core network side even in a case where a large amount of mobile terminals are contained.

### Brief Description of Drawings

Fig. 1 is a system configuration diagram showing one example of the system configurations of the mobile communication network system according to the present invention;
Fig. 2 is a system configuration diagram showing another example of the system configurations of the mobile communication network system according to the present invention;
Fig. 3 is a sequence chart showing one example of operation in a case of carrying out usual attach processing;
Fig. 4 is a sequence chart showing one example of operation in a case of omitting usual detach processing of the core network side when a detach request signal is sent from the mobile station MS in the mobile communication network system of Fig. 1;
Fig. 5 is a sequence chart showing one example of operation in a case of omitting usual attach processing of the core network side when an attach request signal is sent from mobile station MS after omission of the detach processing of Fig. 4 in the mobile communication;
Fig.6A is a sequence chart showing one example of operation in a case of carrying out usual attach processing based on a request signal from the mobile station UE in the mobile communication network system of Fig. 1;
Fig.6B is a sequence chart showing one example of operation in a case of carrying out usual attach processing based on a request signal from the mobile station UE in the mobile communication network system of Fig. 1;
Fig. 7 is a sequence chart showing one example of operation in a case of omitting usual detach processing of the core network side when a detach request signal is sent from the mobile station UE in the mobile communication network system of Fig. 2;
Fig.8A is sequence charts showing one example of operation in a case of omitting usual attach processing of the core network side when an attach request signal is sent from the mobile station UE after omission of the detach processing of Fig. 7 in the mobile communication network system of Fig. 2;
Fig.8B is sequence charts showing one example of operation in a case of omitting usual attach processing of the core network side when an attach request signal is sent from the mobile station UE after omission of the detach processing of Fig. 7 in the mobile communication network system of Fig. 2;
Fig.9A is a sequence chart showing one example of operation in a case of omitting usual detach processing of the core network side when a detach request signal is sent from the mobile station UE in the mobile communication network system of Fig. 2, the example being different from Fig. 7;
Fig.9B is a sequence chart showing one example of operation in a case of omitting usual detach processing of the core network side when a detach request signal is sent from the mobile station UE in the mobile communication network system of Fig. 2, the example being different from Fig. 7;
Fig.10A is sequence charts showing one example of operation in a case of omitting usual attach processing of the core network side when an attach request signal is sent from the mobile station UE after omission of the detach processing of Fig. 9 in the mobile communication network system of Fig. 2; and
Fig.10B is sequence charts showing one example of operation in a case of omitting usual attach processing of the core network side when an attach request signal is sent from the mobile station UE after omission of the detach processing of Fig. 9 in the mobile communication network system of Fig. 2.

### Description of Embodiments

Hereinafter, with reference to accompanying drawings, will be explained preferred embodiments of a mobile communication network system, a mobile terminal attach/detach processing method, and a mobile terminal attach/detach processing program according to the present invention. Note, although in the following explanation, explained are the mobile communication network system and the mobile terminal attach/detach processing method according to the present invention, it is needless to say that such mobile terminal attach/detach processing method may be carried out as the mobile terminal attach/detach processing program executable by a computer provided at a mobile management node arranged on a core network side in order to perform management control of mobile communication, or that the mobile terminal attach/detach processing program may be recorded in a recording medium readable by the computer.

### (Features of Invention)

Prior to explanation of embodiments of the present invention, a summary of features of the present invention will be explained first. The present invention is mainly characterized in that in the mobile management node arranged on the core network side in order to perform management control of the mobile communication, for example, in a mobile management node MME (Mobility Management Entity) and a packet switch SGSN (Serving GPRS Support Node) that have been specified in a 3GPP (Third Generation Partnership Project) standard, detach processing of the core network side is not performed at the time of first detach of a mobile terminal, thereby a session state of the core network side at the time of first attach is held as it is on the core network side, attach/detach processing of the core network side after the first attach can be omitted, thus attach processing and detach processing of the core network side can be avoided from being repeated with respect to a mobile terminal that repeats only attach and detach, and that a load of the core network side can be decreased.

### (Configuration examples of embodiment)

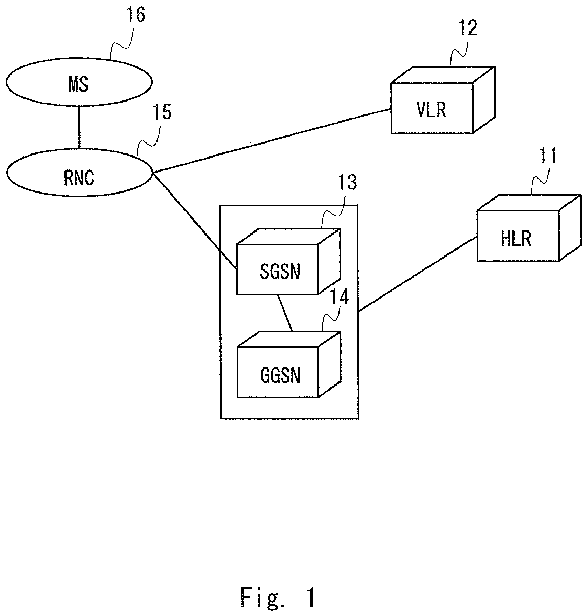

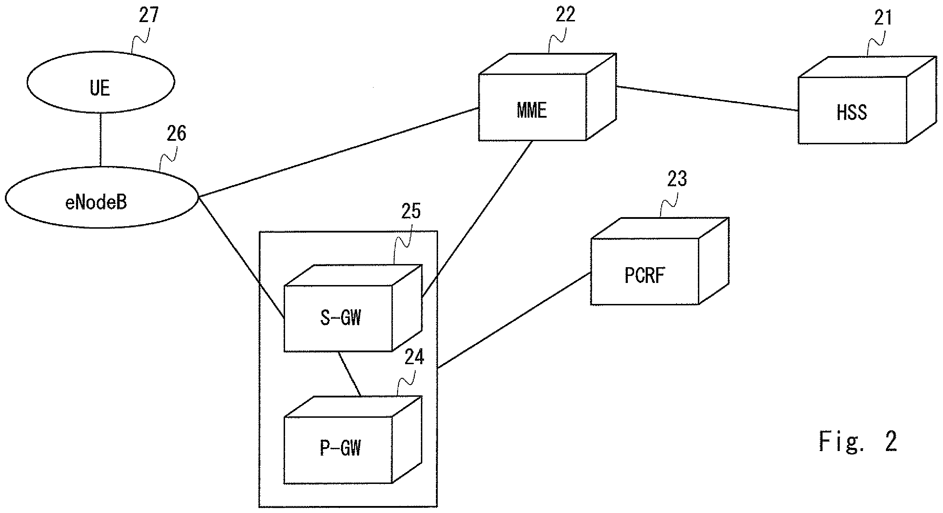

Next, using Figs. 1 and 2, will be explained one example of system configuration examples of the mobile communication network system according to the present invention. Fig. 1 is a system configuration diagram showing one example of the system configurations of the mobile communication network system according to the present invention, and shows a configuration example of a mobile communication network system of a UTRAN (UMTS (Universal Mobile Telephone Services) Terrestrial Radio Access Network)) scheme of a 3GPP standard. In addition, Fig. 2 is a system configuration diagram showing another example of the system configurations of the mobile communication network system according to the present invention, and shows a configuration example of a mobile communication network system of an E-UTRAN (Evolved UTRAN) scheme of the 3GPP standard.

The mobile communication network system of the UTRAN scheme shown in Fig. 1 is, as specified in the 3GPP (Third Generation Partnership Project) standard, configured to include at least: a subscriber information management device HLR (Home Location Register) 11; a subscriber location register VLR (Visitor Location Register) 12; a packet switch SGSN (Serving GPRS (General Packet Radio Service) Support Node) 13; a gateway packet switch GGSN (Gateway GPRS Support Node) 14; a radio line control station RNC (Radio Network Controller) 15; and a mobile station MS (Mobile Station) 16.

Here, in the embodiment, the packet switch SGSN 13 is a mobile management node arranged on the core network side in order to connect the radio line control station RNC 15 and to perform management control of mobile communication. The packet switch SGSN 13 can determine whether to reduce attach/detach processing by means of terminal information and subscriber information (a terminal type) that indicate attributes of a mobile terminal that requests attach/detach, i.e., the mobile station MS 16, or a parameter etc. that are added to an attach/detach request signal from the mobile terminal, i.e., the mobile station MS 16. The packet switch SGSN 13 is provided with a function to omit usual attach/detach processing of the core network side and to return a response signal to the request signal with respect to the mobile terminal, i.e., the mobile station MS 16, if determining that the mobile station MS 16 is the mobile terminal for which the attach/detach processing should be reduced.

In addition, the mobile communication network system of the E-UTRAN scheme shown in Fig. 2 is, as specified in the 3GPP standard, configured to include at least: a subscriber information management device HSS (Home Subscriber Server) 21; a mobile management node MME (Mobility Management Entity) 22; a subscriber policy/charging rule management device PCRF (Policy and Charging Rules Function) 23; a PDN gateway device P-GW (PDN (Packet Data Network) Gateway) 24; a relay gateway device S-GW (Serving Gateway) 25; a radio base station eNodeB (Enhanced Node B) 26; and a mobile station UE (User Equipment) 27.

Here, in the embodiment, the mobile management node MME 22 is a mobile management node arranged on the core network side in order to connect the radio base station eNodeB 26 and to perform management control of mobile communication. The mobile management node MME 22 can determine whether to reduce attach/detach processing by means of terminal information and subscriber information (a terminal type) that indicate attributes of a mobile terminal that requests attach/detach, i.e., the mobile station UE 27, or a parameter etc. that are added to an attach/detach request signal from the mobile terminal, i.e., the mobile station UE 27. The mobile management node MME 22 is provided with a function to omit usual attach/detach processing of the core network side and to return a response signal to the request signal with respect to the mobile terminal, i.e., the mobile station UE 27, if determining that the mobile station UE 27 is the mobile terminal for which the attach/detach processing should be reduced.

### (Explanation of operation of embodiment)

### (First operation example)

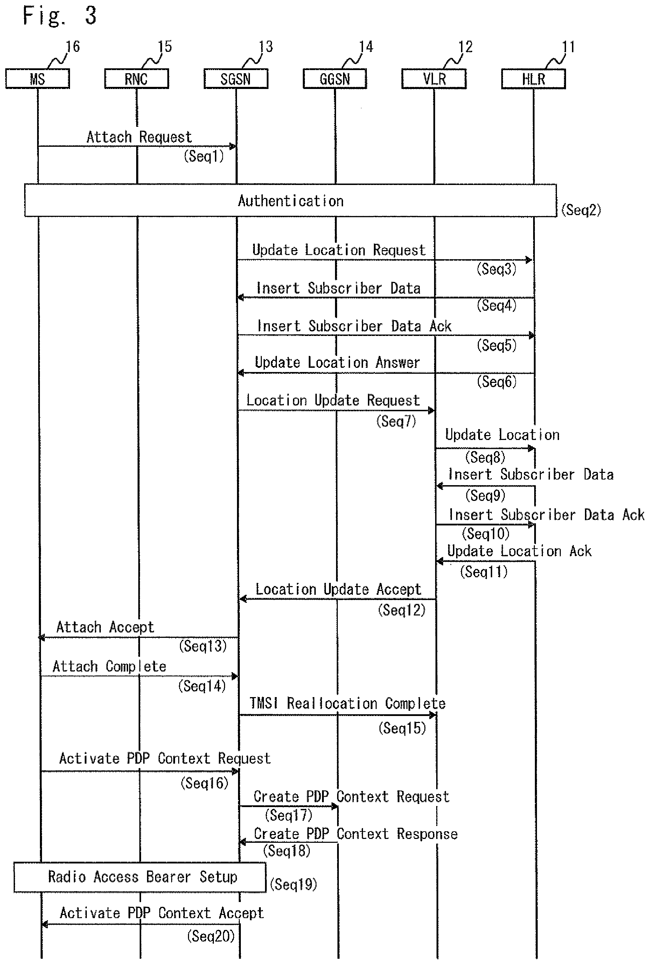

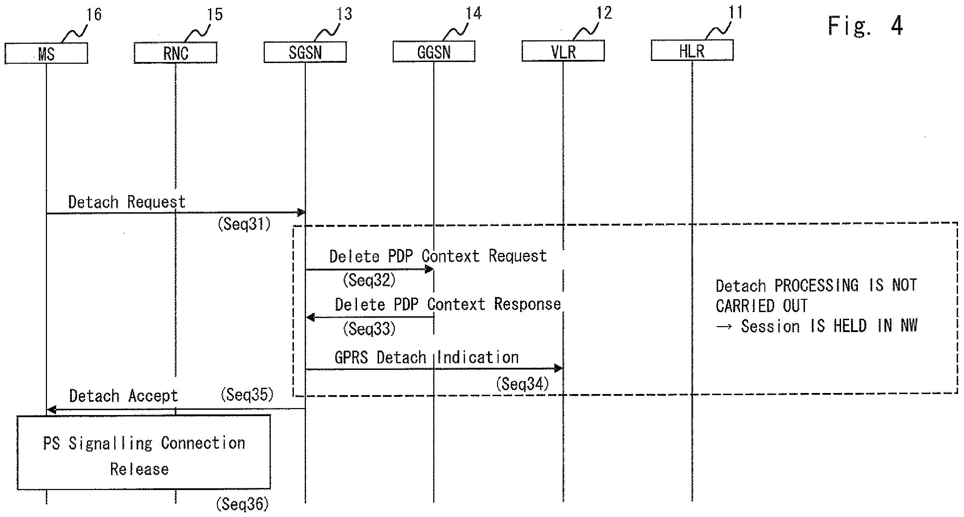

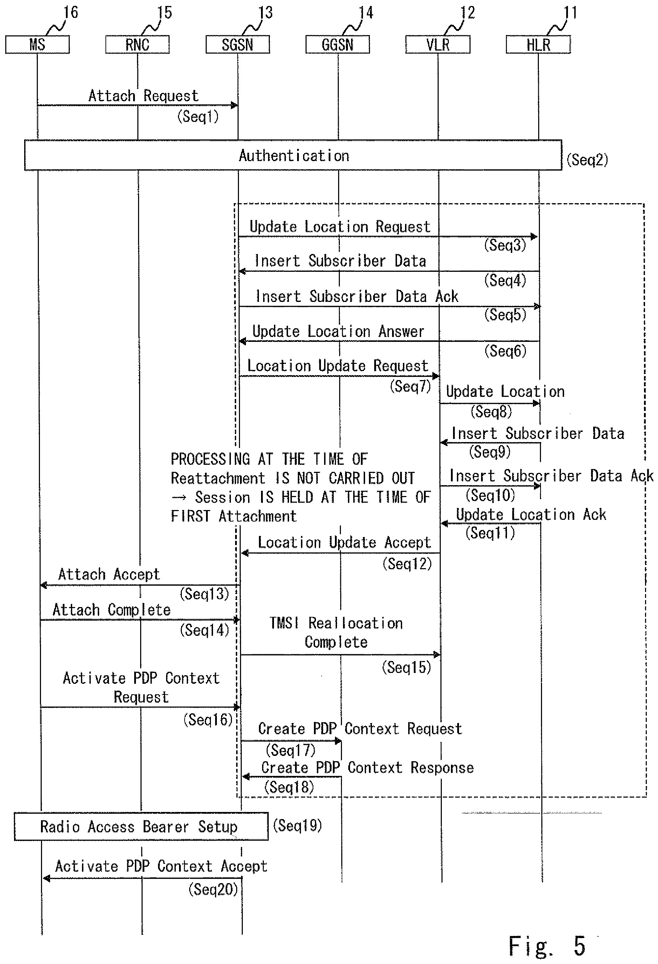

Next, using sequence charts of Figs. 3 to 5, will be explained one example of operation of the mobile communication network system of the UTRAN scheme shown in Fig. 1. Fig. 3 is a sequence chart showing one example of operation in a case of carrying out usual attach processing based on a request signal from the mobile station MS 16 in the mobile communication network system of Fig. 1. Fig. 4 is a sequence chart showing one example of operation in a case of omitting usual detach processing of the core network side when a detach request signal is sent from the mobile station MS 16 in the mobile communication network system of Fig. 1. Fig. 5 is a sequence chart showing one example of operation in a case of omitting usual attach processing of the core network side when an attach request signal is sent from mobile station MS 16 after omission of the detach processing of Fig. 4 in the mobile communication network system of Fig. 1.

First, using the sequence chart shown in Fig. 3, will be explained a procedure of executing usual attach processing based on a TS23.060 standard of the 3GPP. When receiving an Attach Request signal (attach request signal) that requests attach from the mobile station MS 16 (sequence Seq 1), the packet switch SGSN 13 carries out security processing, such as authentication as the core network regarding the mobile station MS 16 as a request source, secret processing, and integrity (sequence Seq 2).

When completing the security processing, such as authentication, secret processing, and integrity, in a case of first registering the mobile station MS 16 as the request source, the packet switch SGSN 13 sends an Update Location Request signal that requests update registration of a location of the mobile station MS 16 to the subscriber information management device HLR 11 (sequence Seq 3). The subscriber information management device HLR 11 that has received the Update Location Request signal performs the update registration of the location of the mobile station MS 16 included in the Update Location Request signal, and sends back to the packet switch SGSN 13 the terminal information and the subscriber information that indicate the attributes regarding the mobile station MS 16 as an Insert Subscriber Data signal (sequence Seq 4).

The packet switch SGSN 13 confirms whether or not the mobile station MS 16 as the request source is the mobile station allowed to perform attach based on the terminal information and the subscriber information that are included in the received Insert Subscriber Data signal. When getting confirmation, the packet switch SGSN 13 sends back to the subscriber information management device HLR 11 an Insert Subscriber Data Ack signal that indicates that the Insert Subscriber Data signal has been normally received together with an MM (Mobility Management) context that indicates a confirmation result (sequence Seq 5). The subscriber information management device HLR 11 that has received the Insert Subscriber Data Ack signal registers the MM context that indicates the confirmation result, and sends to the packet switch SGSN 13 an Update Location Answer signal that indicates that a request of the Update Location Request signal has been accepted (sequence Seq 6).

After that, the packet switch SGSN 13 sends to the subscriber location register VLR 12 a Location Update Request signal that requests the update registration of the location of the mobile station MS 16 (sequence Seq 7). The subscriber location register VLR 12 that has received the Location Update Request signal performs the update registration of the location of the mobile station MS 16, and sends an Update Location signal to the subscriber information management device HLR 11 in order to perform association (sequence Seq 8).

The subscriber information management device HLR 11 that has received the Update Location signal sends back to the subscriber location register VLR 12 the terminal information and the subscriber information that indicate the attributes regarding the mobile station MS 16 (sequence Seq 9). When receiving the Insert Subscriber Data signal, the subscriber location register VLR 12 registers the terminal information and the subscriber information regarding the mobile station MS 16, and sends back to the subscriber information management device HLR 11 the Insert Subscriber Data Ack signal that indicates that the Insert Subscriber Data signal has been normally received (sequence Seq 10).

The subscriber information management device HLR 11 that has received the Insert Subscriber Data Ack signal sends to the subscriber location register VLR 12 an Update Location Ack signal that indicates that a request of the Update Location signal has been accepted (sequence Seq 11). The subscriber location register VLR 12 that has received the Update Location Ack signal acquires a temporary mobile station identifier TMSI (Temporary Mobile Subscriber Identity) for specifying the mobile station MS 16, and sends back to the packet switch SGSN 13 as a transmission source of the Location Update Request signal a Location Update Accept signal that includes the temporary mobile station identifier TMSI and indicates that the association regarding the location update of the mobile station MS 16 has been ended (sequence Seq 12).

The packet switch SGSN 13 that has received the Location Update Accept signal sends to the mobile station MS 16 as the request source an Attach Accept signal that indicates that the attach processing requested from the mobile station MS 16 has been completed (sequence Seq 13). After that, when receiving an Attach Complete signal that indicates that the Attach Accept signal has been received from the mobile station MS 16 (sequence Seq 14), the packet switch SGSN 13 sends back a TMSI Reallocation Complete signal that indicates that rearrangement of the temporary mobile station identifier TMSI has been completed to the subscriber location register VLR 12 to which the temporary mobile station identifier TMSI has been allocated (sequence Seq 15).

When the attach processing of mobile station MS 16 to the core network side has been completed by means of the above procedure, the mobile station MS 16 transmits to the packet switch SGSN 13 an Activate PDP Context Request signal that requests PDP (Packet Data Protocol) context activation for performing communication with a communication partner (sequence Seq 16). Information, such as a PDP type that indicates a type of communication, a PDP address that indicates the communication partner, an access point name, requested service quality, is included in the Activate PDP Context Request signal.

Based on the received Activate PDP Context Request signal, the packet switch SGSN 13 selects an access point to map in the gateway packet switch GGSN 14, and generates a Create PDP Context Request signal to send to the gateway packet switch GGSN 14 (sequence Seq 17). The gateway packet switch GGSN 14 that has received the Create PDP Context Request signal generates a new entry in a PDP context table, and sends back to the packet switch SGSN 13 a Create PDP Context Response signal that indicates that the new entry has been generated in the PDP context table (sequence Seq 18).

As a result of this, setup of a radio access bearer (Radio Access Bearer Setup) is executed among the mobile station MS 16, the radio line control station RNC 15, and the packet switch SGSN 13 (sequence Seq 19). When setup of the radio access bearer is ended, and a communication session is established, the packet switch SGSN 13 sends back to the mobile station MS 16 an Activate PDP Context Accept signal that indicates that the PDP context activation has been ended (sequence Seq 20).

As described above, when in the packet switch SGSN 13 that has received a usual attach request from the mobile terminal, i.e., the mobile station MS 16, the usual attach processing is carried out and the communication session of the mobile terminal, i.e., the mobile station MS 16, is established, the packet switch SGSN 13 becomes a state of holding the established session.

Next, using a sequence chart of Fig. 4, will be explained one example of operation in a case of omitting usual detach processing of the core network side when a detach request is generated from the mobile station MS 16 in a state where the attach processing has been executed in Fig. 3. First, will be explained a sequence in a case of carrying out the usual detach processing when the detach request is generated.

When the usual detach processing is carried out, the packet switch SGSN 13 receives a Detach Request signal (detach request signal) that requests detach from the mobile station MS 16 (sequence Seq 31). Next, in order to release a communication session with a communication partner, the packet switch SGSN 13 generates a Delete PDP Context Request signal, and sends it to the gateway packet switch GGSN 14 (sequence Seq 32).

The gateway packet switch GGSN 14 that has received the Delete PDP Context Request signal deletes an appropriate entry from the PDP context table, and sends back to the packet switch SGSN 13 a Delete PDP Context Response signal that indicates that the session has been released (sequence Seq 33). When receiving the Delete PDP Context Response signal, the packet switch SGSN 13 sends a GPRS (General Packet Radio Service) Detach Indication signal to the subscriber location register VLR 12 to which the temporary mobile station identifier TMSI for the communication has been allocated. The packet switch SGSN 13 hereby releases allocation of the temporary mobile station identifier TMSI, and makes association with the packet switch SGSN 13 deleted (sequence Seq 34).

When the above detach processing of the core network side is ended, the packet switch SGSN 13 sends to the mobile station MS 16 as the request source a Detach Accept signal that indicates that the detach processing requested from the mobile station MS 16 has been completed (sequence Seq 35). As a result of this, the packet switch SGSN 13 transitions to a state of PS Signalling Connection Release, radio resources between the mobile station MS 16 and the radio line control station RNC 15 are released, and connection of a signal for packet service of the mobile station MS 16 with the core network side is opened (sequence Seq 36).

Next, using the sequence chart of Fig. 4, will be explained operation in the case of omitting the usual detach processing of the core network side, even though the detach request is generated from the mobile station MS 16 in the embodiment according to the present invention.

In the case of omitting the usual detach processing of the core network side, when as shown in Fig. 4, receiving the Detach Request signal (detach request signal) that requests detach from the mobile terminal, i.e., the mobile station MS 16 (sequence Seq 31), the packet switch SGSN 13 determines whether or not the mobile terminal, i.e., the mobile station MS 16 is the mobile terminal as a target of attach/detach processing reduction by referring to the terminal information or the subscriber information etc. in which the attributes of the mobile terminal have been registered.

As a result of it, if the packet switch SGSN 13 determines that the mobile terminal, i.e., the mobile station MS 16, is the mobile terminal as the target of the attach/detach processing reduction, detach processing of the core network side of sequences Seq 32, Seq 33, and Seq 34 is omitted, and processing proceeds to sequence Seq 35, remaining in a state of holding the communication session (Session) in the network. The packet switch SGSN 13 then sends the Detach Accept signal to the mobile station MS 16 as the request source, remaining in a state where the detach processing of the core network side has not been carried out (sequence Seq 35).

Accordingly, also after that, in the core network side including the packet switch SGSN 13, only a radio block transitions to the state of PS Signalling Connection Release, with session information of the mobile terminal, i.e., the mobile station MS 16 being continued to be held, radio resources between the mobile station MS 16 and the radio line control station RNC 15 are released, and connection of the signal for the packet service of the mobile station MS 16 with the core network side is opened (sequence Seq 36). That is, as for the radio resources between the mobile station MS 16 and the radio line control station RNC 15, establishment/release is certainly carried out in each time of attach/detach processing regardless of omission of the detach processing of the core network side.

It is to be noted that when only the radio block for accessing the core network transitions to the state of PS Signalling Connection Release, remaining in the state of holding the communication session (Session) in the core network side, the packet switch SGSN 13 performs the following setting in order to prevent a release failure of the communication session of the network side. For example, in sequence Seq 35, the packet switch SGSN 13 sets to a session holding timer a time a little longer by a predetermined time than a generation interval of a reattach/redetach request from the mobile terminal, i.e., the mobile station MS 16, as a time to wait for forced release of the session.

After that, when the session holding timer expires, for example, when the reattach/redetach request from the mobile terminal, i.e., the mobile station MS 16, is not generated once a day, the packet switch SGSN 13 carries out the usual detach processing of sequences Seq 32, Seq 33, and Seq 34. Hereby deleted is information on the communication session of the mobile station MS 16 that has been held in not only the packet switch SGSN 13 but in the gateway packet switch GGSN 14 and the subscriber location register VLR 12, and the session in the packet switch SGSN 13 etc. is released.

Furthermore, when sending the Detach Accept signal to the mobile station MS 16 as the request source, with the detach processing of the core network side not being carried out, the packet switch SGSN 13 stops a periodic RAU (Routing Area Update) waiting timer that is the timer for periodically updating a routing area and also cancels a subsequent paging request until a reattach request from the mobile station MS 16 is generated or the session holding timer expires.

Next, using a sequence chart of Fig. 5, will be explained one example of operation in a case of omitting the usual attach processing of the core network side when an attach request is generated from the mobile station MS 16 in a state where the detach processing is omitted in Fig. 4. When the attach request is generated from the mobile station MS 16, usually, attach processing as illustrated in Fig. 3 is carried out. However, when the attach request from the mobile station MS 16 is generated in the state where the detach processing is omitted, as shown in Fig. 5, the usual attach processing of the core network side is omitted, and sequences Seq 3 to Seq 12, sequence Seq 15, sequences Seq 17 and 18 are omitted.

Here, the mobile terminal, i.e., the mobile station MS 16, holds an old Security context allocated at the time of the previous attach processing, and transmits the Attach Request signal (attach request signal) using the held old Security context to the packet switch SGSN 13 (sequence Seq 1).

When receiving the Attach Request signal using the old Security context from the mobile station MS 16, the packet switch SGSN 13 determines whether or not the mobile station MS 16 is the mobile terminal for which the detach processing to the communication session in having performed the attach processing previous time was omitted as a result of analyzing the Attach Request signal. If determining that the Attach Request signal is a reattach request from the mobile station MS 16 for which the detach processing was omitted, the packet switch SGSN 13 omits to carry out security processing, such as authentication as the core network regarding the mobile station MS 16 as the request source, secret processing, and integrity, and continues to use the old Security context as it is (sequence Seq 2).

Furthermore, the packet switch SGSN 13 omits the attach processing of the core network side of sequences Seq 3 to Seq 12, and sends to the mobile station MS 16 as the request source an Attach Accept signal that indicates that the reattach processing requested from the mobile station MS 16 has been completed (sequence Seq 13). After that, when receiving the Attach Complete signal that indicates that the Attach Accept signal has been received from the mobile station MS 16 (sequence Seq 14), the packet switch SGSN 13 also omits operation of sequence Seq 15 that sends back a TMSI Reallocation Complete signal to the subscriber location register VLR 12, and transitions to a state of waiting an Activate PDP Context Request signal from the mobile station MS 16.

When receiving the Activate PDP Context Request signal from the mobile station MS 16, the Packet switch SGSN 13 also omits operation of sequences Seq 17 and Seq 18 that exchanges the Create PDP Context Request signal and the Create PDP Context Request signal with the gateway packet switch GGSN 14, and executes the setup of a radio access bearer (Radio Access Bearer Setup) among the mobile station MS 16, the radio line control station RNC 15, and the packet switch SGSN 13 (sequence Seq 19). When the setup of the radio access bearer is ended, indicates that the PDP context activation has been ended (sequence Seq 20).

As described above, the packet switch SGSN 13 that has received the usual attach request from the mobile terminal, i.e., the mobile station MS 16 becomes a state of performing communication using the communication session held previous time as it is without carrying out the usual attach processing of the core network side.

For example, to the detach/attach request signal, may be added a parameter (for example, sleep notification that indicates that a power source of the mobile station MS 16 transitions to a sleep state at the time of detach, and wake up notification that indicates that the power source of the mobile station MS 16 has transitioned to a wake up state from the sleep state at the time of attach) that indicates whether or not the mobile station MS 16 is the mobile terminal as the target of the attach/detach processing reduction. Hereby, in receiving the detach/attach request signal, the packet switch SGSN 13 may determine whether or not the mobile terminal, i.e., the mobile station MS 16, is the mobile terminal as the target of the attach/detach processing reduction by referring to such parameter added in addition to the detach/attach request signal.

### (Second operation example)

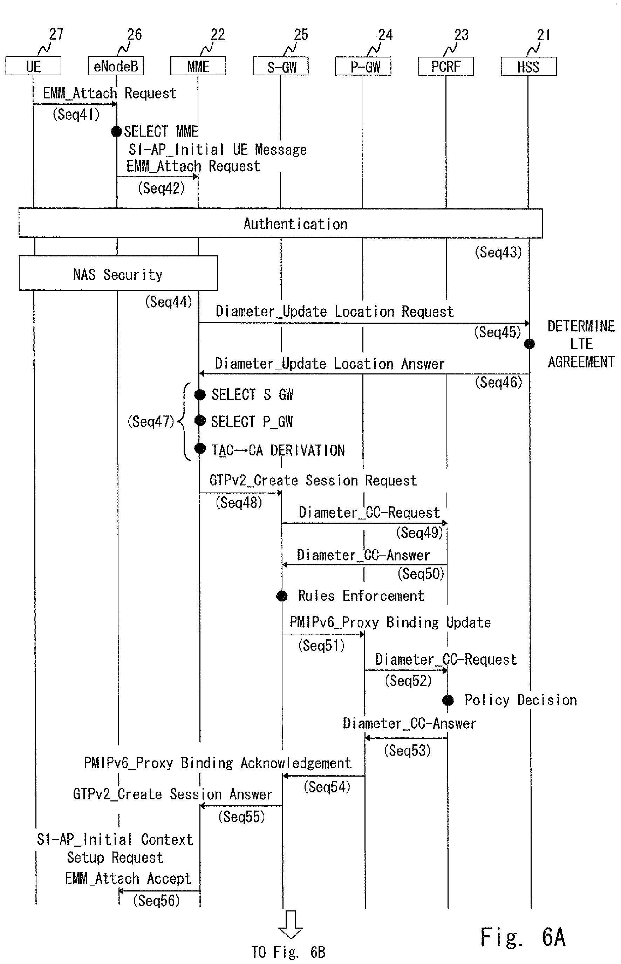

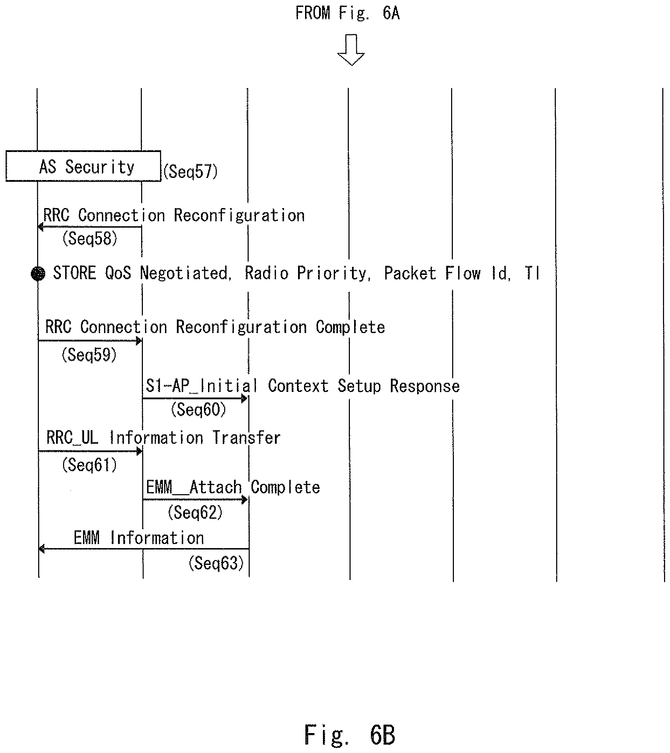

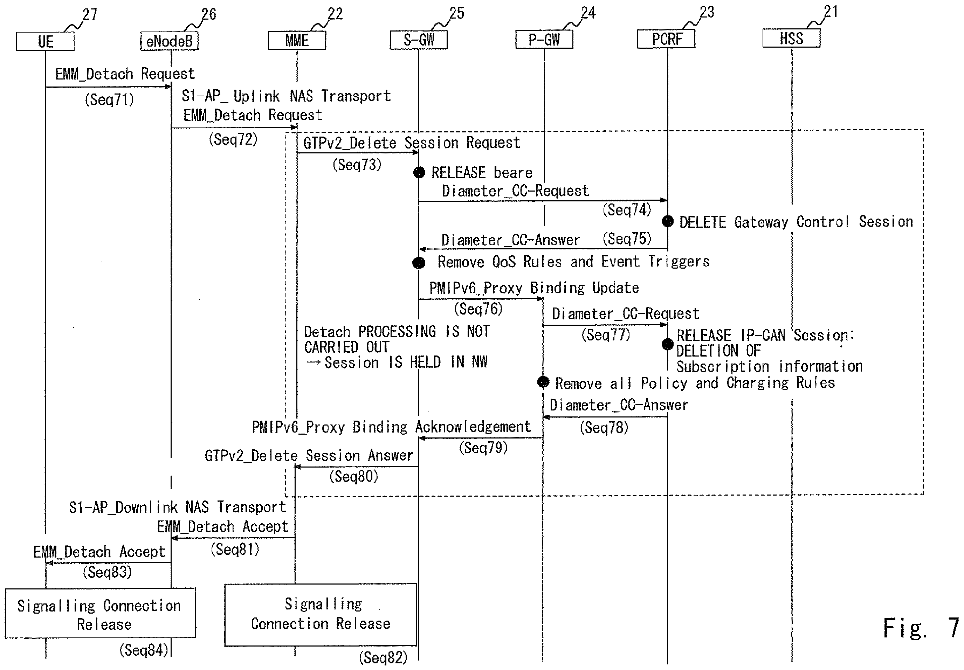

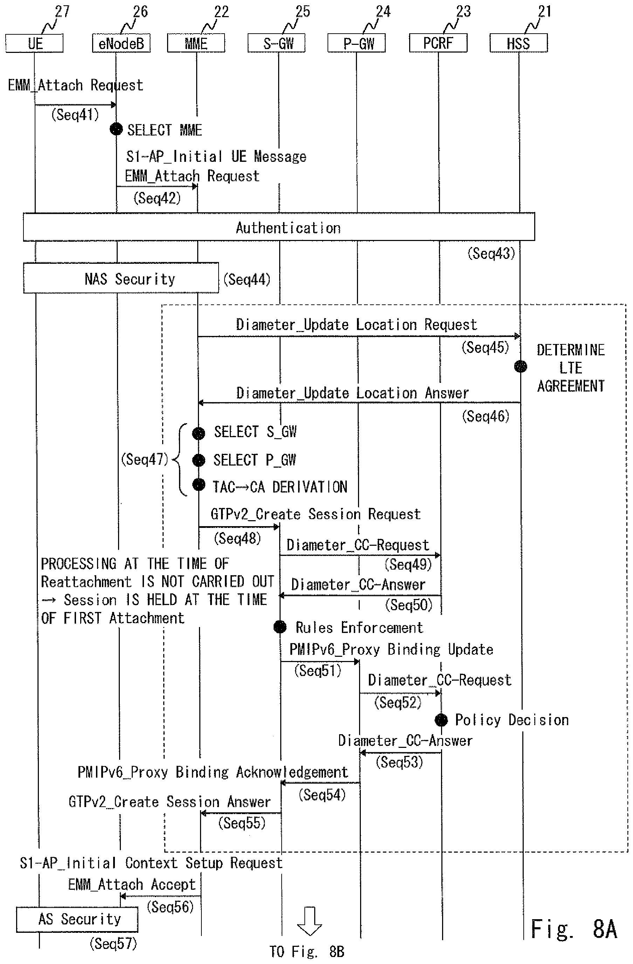

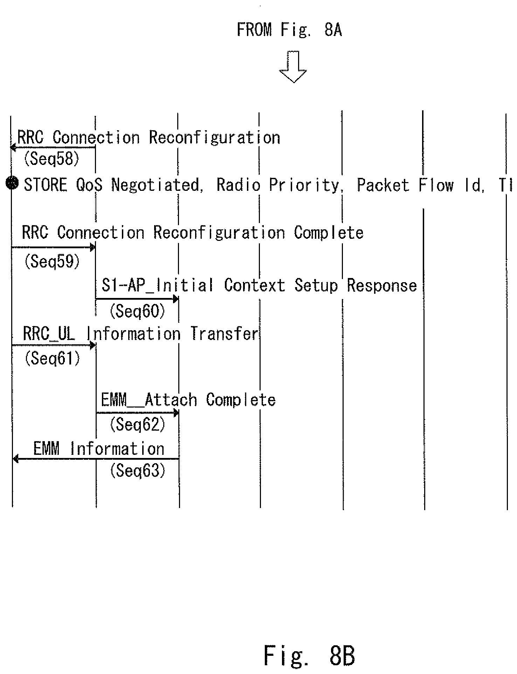

Next, using sequence charts of Figs. 6 to 8, will be explained one example of operation of the mobile communication network system of the E-UTRAN scheme shown in Fig. 2. Just similarly not only in the case of the mobile communication network system of the UTRAN scheme of Fig. 1 but also in the mobile communication network system of the E-UTRAN scheme of Fig. 2, it is possible to reduce the attach/detach processing of the core network (core node) side. Figs. 6A and 6B are sequence charts showing one example of operation in a case of carrying out usual attach processing based on a request signal from the mobile station UE 27 in the mobile communication network system of Fig. 2. Fig. 7 is a sequence chart showing one example of operation in a case of omitting usual detach processing of the core network side when a detach request signal is sent from the mobile station UE 27 in the mobile communication network system scheme shown in Fig. 2. Just similarly not only in the case of the mobile communication network system of the UTRAN scheme of Fig. 1 but also in the mobile communication network system of the E-UTRAN scheme of Fig. 2, it is possible to reduce the attach/detach processing of the core network (core node) side. Figs. 6A and 6B are sequence charts showing one example of operation in a case of carrying out usual attach processing based on a request signal from the mobile station UE 27 in the mobile communication network system of Fig. 2. Fig. 7 is a sequence chart showing one example of operation in a case of omitting usual detach processing of the core network side when a detach request signal is sent from the mobile station UE 27 in the mobile communication network system of Fig. 2. Figs. 8A and 8B are sequence charts showing one example of operation in a case of omitting usual attach processing of the core network side when an attach request signal is sent from the mobile station UE 27 after omission of the detach processing of Fig. 7 in the mobile communication network system of Fig. 2.

First, using the sequence charts shown in Figs. 6A and 6B, will be explained a procedure of executing usual attach processing based on a TS23.401 standard of the 3GPP. The mobile station UE 27 sets a radio control link through which a control signal is transmitted and received to and from the radio base station eNodeB 26, and sends an EMM (EPS (Evolved Packet System) Mobility Management) Attach Request signal (attach request signal) that requests attach to the mobile management node MME 22 (sequence Seq 41). The radio base station eNodeB 26 that has received the EMM Attach Request signal selects the mobile management node MME 22 that serves as a transmission destination, and sends an EMM Attach Request signal of an S1-AP (S1 Application Protocol)_Initial UE Message form to the selected mobile management node MME 22 (sequence Seq 42).

When receiving the EMM Attach Request signal that requests attach from the mobile station UE 27, the mobile management node MME 22 carries out authentication processing as a core network regarding the mobile station UE 27 as a request source (sequence Seq 43). When the authentication processing is ended, the mobile management node MME 22 carries out security processing, such as secret processing regarding an NAS (Non-Access-Stratum) among the mobile station UE 27, the radio base station eNodeB 26, and the mobile management node MME 22, and integrity (sequence Seq 44).

When completing the security processing, such as secret processing and integrity, in a case of first registering the mobile station UE 27 as the request source, the mobile management node MME 22 sends to a subscriber information management device HSS 21 a Diameter Update Location Request signal that requests update registration of a location of the mobile station UE 27 (sequence Seq 45). When the subscriber information management device HSS 21 that has received the Diameter Update Location Request signal confirms presence/absence of an LTE (Long Term Evolution) agreement of the mobile station UE 27 included in the Diameter Update Location Request signal, and when the agreement is made, the subscriber information management device HSS 21 performs update registration of the location of the mobile station UE 27, and sends back to the mobile management node MME 22 a Diameter Update Location Answer signal that indicates that registration of the location of the mobile station UE 27 has been completed (sequence Seq 46).

The mobile management node MME 22 selects the relay gateway device S-GW 25 that relays packet data transmitted and received to/from the mobile station UE 27 through the radio base station eNodeB 26. Furthermore, the mobile management node MME 22 selects a PDN gateway device P-GW 24 that transfers packet data between the relay gateway device S-GW 25 and a default PDN (Packet Data Network) previously allocated to the mobile station UE 27. Furthermore, the mobile management node MME 22 derives a bearer for transferring packet data set as a default based on a model/manufacturer identification code TAC (Type Allocation Code) included in an identification number IMEI (International Mobile Equipment Identity) of the mobile station UE 27 (sequence Seq 47).

After that, the mobile management node MME 22 sends to the selected relay gateway device S-GW 25 a GTPv2 (Evolved GPRS (General Packet Radio Service) Tunneling Protocol for EPS (Evolved Packet System)) Create Session Request signal that serves as a setting request of the bearer of the packet data between the mobile station UE 27 and the default PDN (sequence Seq 48). In the GTPv2 Create Session Request signal, included are at least the identification number IMEI of the mobile station UE 27, an IP address of the selected PDN gateway device P-GW 24, and a bearer to be set.

The relay gateway device S-GW 25 that has received the GTPv2 Create Session Request signal sets a communication session of the designated mobile station UE 27, and sends to the subscriber policy/charging rule management device PCRF 23 a Diameter CC-Request signal for inquiring a charging rule and a policy of communication quality regarding communication of the designated mobile station UE 27 (sequence Seq 49). The subscriber policy/charging rule management device PCRF 23 that has received the Diameter CC-Request signal sets the communication session of the mobile station UE 27, and sends back to the relay gateway device S-GW 25 as an inquirer information including the charging rule and the policy of the communication quality regarding the communication of the mobile station UE 27 as a Diameter CC-Answer signal (sequence Seq 50).

When receiving the Diameter CC-Answer signal, the relay gateway device S-GW 25 performs setting of information on the charging rule, the policy of the communication quality, and a trigger of an event regarding the communication of the mobile station UE 27, and the designated bearer. Furthermore, the relay gateway device S-GW 25 sends a PMIPv6 (Proxy Mobile IPv6) Proxy Binding Update signal that requests binding path setting to the PDN gateway device P-GW 24 in order to set a tunneling path with the designated PDN gateway device P-GW 24 (sequence Seq 51).

The PDN gateway device P-GW 24 that has received the PMIPv6 Proxy Binding Update signal allocates an IP address for the mobile station MS 16 in the default PDN and secures the designated bearer, and sends to the subscriber policy/charging rule management device PCRF 23 the Diameter CC-Request signal that requests decision of the charging rule and the policy of the communication quality regarding the communication of the mobile station UE 27 (sequence Seq 52). The subscriber policy/charging rule management device PCRF 23 that has received the Diameter CC-Request signal decides the charging rule and the policy of the communication quality regarding the communication of the mobile station UE 27 based on the communication path and the bearer that have been secured as the mobile station UE 27, and sends back them to the PDN gateway device P-GW 24 as the Diameter CC-Answer signal (sequence Seq 53).

When receiving the Diameter CC-Answer signal, the PDN gateway device P-GW 24 allocates the IP address for the mobile station MS 16 in the default PDN. Furthermore, the PDN gateway device P-GW 24 sets a tunneling path of the designated bearer, and subsequently, sends back to the relay gateway device S-GW 25 a PMIPv6 Proxy Binding Acknowledgement signal that indicates that the tunneling path of the designated bearer has been set (sequence Seq 54). As a result of this, the always held tunneling path is set to the allocated IP address as a communication session between the PDN gateway device P-GW 24 and the relay gateway device S-GW 25.

The relay gateway device S-GW 25 that has received the PMIPv6 Proxy Binding Acknowledgement signal prepares a radio access bearer that goes in a direction from the relay gateway device S-GW 25 to the radio base station eNodeB 26, and sends back to the mobile management node MME 22 a GTPv2 Create Session Answer signal that indicates that setting of the bearer of the packet data has been completed (sequence Seq 55).

The mobile management node MME 22 that has received the GTPv2 Create Session Answer signal indicates that the attach processing requested from the mobile station UE 27 has been completed, and sends to the radio base station eNodeB 26 an EMM Attach Accept signal of an S1-AP_Initial Context Setup Request form that requests setting of a context including contents required for a communication path and communication control, such as an IP address, a bearer, and a policy regarding quality, that are included in the GTPv2 Create Session Answer signal (sequence Seq 56).

When receiving the EMM Attach Accept signal of the S1-AP_Initial Context Setup Request form, the radio base station eNodeB 26 carries out security processing, such as secret processing regarding an AS (Access-Stratum) in a radio block with the mobile station UE 27, and integrity (sequence Seq 57). The radio base station eNodeB 26 indicates completion of the attach processing of the core network side, and sends to the mobile station UE 27 as the request source an RRC (Radio Resource Control) Connection Reconfiguration signal that instructs setting of the contents required for the communication path and the communication control, such as the IP address, the bearer, and the policy regarding the quality, that are included in the EMM Attach Accept signal (sequence Seq 58).

The mobile station UE 27 sets a priority (Radio Priority) of a radio signal, etc. based on the contents included in the RRC Connection Reconfiguration signal. Furthermore, the mobile station UE 27 stores a packet flow identification ID (Packet Flow Id), the IP address, the bearer, the policy of the quality (i.e., QoS (Quality of Service) Negotiation), etc. Furthermore, the mobile station UE 27 sends back to the radio base station eNodeB 26 an RRC Connection Complete signal that indicates that the setting instructed by the RRC Connection Reconfiguration signal has been ended (sequence Seq 59).

The radio base station eNodeB 26 that has received the RRC Connection Complete signal sends back to the mobile management node MME 22 an S1-AP_Initial Context Setup Response signal that indicates that setting in accordance with contents instructed as an S1-AP_Initial Context Setup Request signal has been completed (sequence Seq 60). Information that the radio base station eNodeB 26 has set is also included in the S1-AP_Initial Context Setup Response signal as information required for setting of the radio access bearer that goes in the direction from the relay gateway device S-GW 25 to the radio base station eNodeB 26.

After that, when receiving from the mobile station UE 27 information (Uplink Information) on an uplink direction of the radio line that goes to a radio base station eNodeB 26 side as an RRC UL Information Transfer signal (sequence Seq 61), the radio base station eNodeB 26 generates an EMM Attach Complete signal that indicates that the attach processing has been completed, and sends it to the mobile management node MME 22 (sequence Seq 62). The mobile management node MME 22 that has received the EMM Attach Complete signal sends an EMM Information signal to the mobile station UE 27 through the radio base station eNodeB 26 (sequence Seq 63).

As described above, when in the mobile management node MME 22 that has received the usual attach request from the mobile terminal, i.e., the mobile station UE 27, the usual attach processing is carried out and the communication session of the mobile terminal, i.e., the mobile station UE 27, is established, the mobile management node MME 22 becomes a state of holding the established session.

Next, using a sequence chart of Fig. 7, will be explained one example of operation in a case of omitting usual detach processing of the core network side when a detach request is generated from the mobile station UE 27 in a state where the attach processing has been executed in Fig. 6. First, will be explained a sequence in a case of carrying out the usual detach processing when the detach request is generated.

When the usual detach processing is carried out, the mobile station UE 27 sets a radio control link through which a control signal is transmitted and received to/from the radio base station eNodeB 26, and sends to the radio base station eNodeB 26 an EMM Detach Request signal (detach request signal) that requests detach for the mobile management node MME 22 (sequence Seq 71). The radio base station eNodeB 26 that has received the EMM Detach Request signal sends to the mobile management node MME 22 as a transmission destination an EMM Detach Request signal of an S1-AP (S1 Application Protocol)_Uplink NAS Transport form (sequence Seq 72).

The mobile management node MME 22 that has received the EMM Detach Request signal sends a GTPv2 Delete Session Request signal that serves as a release request of a session of packet data between the mobile station UE 27 and the default PDN to the relay gateway device S-GW 25 that has formed the communication session of the mobile station UE 27 (sequence Seq 73). When receiving the GTPv2 Delete Session Request signal, the relay gateway device S-GW 25 releases a bearer used for the session, and subsequently, sends to the subscriber policy/charging rule management device PCRF 23 a Diameter CC-Request signal that requests to delete the communication session (sequence Seq 74).

The subscriber policy/charging rule management device PCRF 23 that has received the Diameter CC-Request signal deletes a session for gateway control (Gateway Control Session) regarding the mobile station UE 27, and sends back to the relay gateway device S-GW 25 as an inquirer a Diameter CC-Answer signal that indicates that the session for gateway control has been deleted (sequence Seq 75).

When receiving the Diameter CC-Answer signal, the relay gateway device S-GW 25 deletes the information on the charging rule, the policy of the communication quality, and the trigger of the event regarding the communication of the mobile station UE 27. Furthermore, the relay gateway device S-GW 25 sends a PMIPv6 (Proxy Mobile IPv6) Proxy Binding Update signal that requests release of the binding path setting to the PDN gateway device P-GW 24 in order to open the tunneling path with the PDN gateway device P-GW 24 allocated to the communication session of the mobile station UE 27 (sequence Seq 76).

The PDN gateway device P-GW 24 that has received the PMIPv6 Proxy Binding Update signal sends to the subscriber policy/charging rule management device PCRF 23 a Diameter CC-Request signal that requests deletion of a charging rule and a policy of communication quality regarding a communication session of an IP-CAN (IP-Connectivity Access Network) of a bearer level of the mobile station UE 27, and deletes all the charging rules and policies of the communication quality regarding the mobile station UE 27 (sequence Seq 77).

The Subscriber policy/charging rule management device PCRF 23 that has received the Diameter CC-Request signal releases the communication session of the IP-CAN regarding the communication of the bearer level of the mobile station UE 27 and deletes all the registration information on the communication session of the IP-CAN session, and sends back to the PDN gateway device P-GW 24 as a Diameter CC-Answer signal (sequence Seq 78).

When receiving the Diameter CC-Answer signal, the PDN gateway device P-GW 24 opens the tunneling path of the set bearer, and subsequently, sends back to the relay gateway device S-GW 25 a PMIPv6 Proxy Binding Acknowledgement signal that indicates that the tunneling path of the set bearer has been opened (sequence Seq 79). As a result of this, the tunneling path always held between the PDN gateway device P-GW 24 and the relay gateway device S-GW 25 is opened.

The relay gateway device S-GW 25 that has received the PMIPv6 Proxy Binding Acknowledgement signal deletes setting of the radio access bearer that goes in the direction from the relay gateway device S-GW 25 to the radio base station eNodeB 26, and sends back to the mobile management node MME 22 a GTPv2 Delete Session Answer signal that indicates that release of the bearer of the packet data has been completed (sequence Seq 80).

The mobile management node MME 22 that has received the GTPv2 Create Session Answer signal indicates that the detach processing requested from the mobile station UE 27 has been completed, and sends to the radio base station eNodeB 26 an EMM Detach Accept signal of an S1-AP_Downlink NAS Transport form including contents required for release of a communication path and communication control that are included in the GTPv2 Create Session Answer signal (sequence Seq 81). As a result of this, the core network side transitions to a state of Signalling Connection Release, and becomes a state where all resources regarding the communication session in which detach has been requested from the mobile station UE 27 are released (sequence Seq 82).

When determining that the above detach processing of the core network side has been ended by receiving the EMM Detach Accept signal, the radio base station eNodeB 26 releases setting in the radio base station eNodeB 26 based on information included in the EMM Detach Accept signal, and sends to the mobile station UE 27 as the request source an EMM Detach Accept signal that indicates that all the detach processing requested from the mobile station UE 27 has been completed (sequence Seq 83). As a result of this, a wireless block also transitions to the state of Signalling Connection Release, radio resources between the mobile station UE 27 and the radio base station eNodeB 26 are released, and connection of a signal for packet service of the mobile station UE 27 with the core network side is opened (sequence Seq 84).

Next, using the sequence chart of Fig. 7, will be explained operation in the case of omitting the usual detach processing of the core network side, even though the detach request is generated from the mobile station UE 27 in the embodiment according to the present invention.

In the case of omitting the usual detach processing of the core network side, as shown in Fig. 7, the mobile management node MME 22 receives an EMM Detach Request signal (detach request signal) that requests detach from the mobile terminal, i.e., the mobile station UE 27 via the radio base station eNodeB 26 (sequence Seq 72). The mobile management node MME 22 determines whether or not the mobile terminal, i.e., the mobile station UE 27 is the mobile terminal as a target of attach/detach processing reduction by referring to terminal information or subscriber information etc. in which attributes of the mobile terminal have been registered.

As a result of it, if the mobile management node MME 22 determines that the mobile terminal, i.e., the mobile station UE 27, is the mobile terminal as the target of the attach/detach processing reduction, detach processing of the core network side of sequences Seq 73 to Seq 80 is omitted, and processing proceeds to sequence Seq 81, remaining in a state of holding a communication session (Session) in the network. The mobile management node MME 22 then sends an EMM Detach Accept signal to the radio base station eNodeB 26 of which the mobile station UE 27 as the request source is in a service area, remaining in a state of not carrying out the detach processing of the core network side (sequence Seq 81). After that, the radio base station eNodeB 26 sends the EMM Detach Accept signal to the mobile station UE 27 as the request source (sequence Seq 83).

Accordingly, also after that, the core network side including the mobile management node MME 22 does not transition to the state of Signalling Connection Release of sequence Seq 82, and only a radio block for accessing the core network transitions to the state of Signalling Connection Release, with session information of the mobile terminal, i.e., the mobile station UE 27 being continued to be held. In addition, radio resources between the mobile station UE 27 and the radio base station eNodeB 26 are released, and connection of the signal for the packet service of the mobile station UE 27 with the core network side is opened (sequence Seq 84). That is, as for the radio resources between the mobile station UE 27 and the radio base station eNodeB 26, establishment/release is certainly carried out in each time of the attach/detach processing regardless of omission of the detach processing of the core network side.

It is to be noted that when only the radio block for accessing the core network transitions to the state of Signalling Connection Release, remaining in the state of holding the communication session (Session) in the core network side, the mobile management node MME 22 performs next setting in order to prevent a release failure of the communication session of the network side. In sequence Seq 81, the mobile management node MME 22 sets to a session holding timer a time a little longer by a predetermined time than a generation interval of a reattach/redetach request from the mobile terminal, i.e., the mobile station UE 27, as a time to wait for forced release of the session.

After that, when the session holding timer expires, for example, when the reattach/redetach request from the mobile terminal, i.e., the mobile station UE 27, is not generated once a day, the mobile management node MME 22 carries out usual detach processing of sequences Seq 73 to Seq 80. Hereby deleted is information on the communication session of the mobile station UE 27 that has been held in the core network side including the mobile management node MME 22, and the session is released.

Furthermore, when sending the EMM Detach Accept signal to the radio base station eNodeB 26 of which the mobile station UE 27 as the request source is in the service area, with the detach processing of the core network side not being carried out, the mobile management node MME 22 stops a periodic TAU (Tracking Area Update) waiting timer that is the timer for periodically updating a location registration area, and also cancels a subsequent paging request until a reattach request from the mobile station UE 27 is generated, or the session holding timer expires.

Next, using sequence charts of Figs. 8A and 8B, will be explained one example of operation in a case of omitting usual attach processing of the core network side when an attach request is generated from the mobile station UE 27 in the state where the detach processing is omitted in Fig. 7. When the attach request is generated from the mobile station UE 27, usually, attach processing as illustrated in Fig. 6 is carried out. However, when the attach request from the mobile station UE 27 is generated in the state where the detach processing is omitted, as shown in Fig. 8A, the usual attach processing of the core network side is omitted, and processing of sequences Seq 45 to Seq 55 is omitted.

Here, the mobile terminal, i.e., the mobile station UE 27, holds an old Security context allocated at the time of the last attach processing, and transmits to the radio base station eNodeB 26 an EMM Attach Request signal (attach request signal) using the held old Security context (sequence Seq 41). Accordingly, the radio base station eNodeB 26 sends to the mobile management node MME 22 the EMM Attach Request signal using the old Security context (sequence Seq 42).

When receiving the EMM Attach Request signal using the old Security context that has been sent from the mobile station UE 27 through the radio base station eNodeB 26, the mobile management node MME 22 determines whether or not the mobile station UE 27 is the mobile terminal for which detach processing to the communication session in having performed the attach processing previous time was omitted as a result of analyzing the EMM Attach Request signal. If determining that the EMM Attach Request signal is a reattach request from the mobile station UE 27 for which the detach processing was omitted, the mobile management node MME 22 omits to carry out security processing, such as authentication as the core network regarding the mobile station UE 27 as the request source, secret processing, and integrity, and continues to use the old Security context as it is (sequences Seq 43 and Seq 44).

Furthermore, the mobile management node MME 22 omits attach processing of the core network side of sequences Seq 45 to Seq 55, and sends to the radio base station eNodeB 26 of which the mobile station UE 27 as the request source is in the service area an EMM Attach Accept signal of the S1-AP_Initial Context Setup Request form that indicates that reattach processing requested from the mobile station UE 27 has been completed (sequence Seq 56). After that, after carrying out setting processing of a radio line for accessing the core network with respect to the mobile station UE 27 as the request source by a procedure similar to the usual attach processing, the radio base station eNodeB 26 sends to the mobile management node MME 22 from the radio base station eNodeB 26 an S1-AP_Initial Context Setup Response signal that indicates that the EMM Attach Accept signal of the S 1-AP_Initial Context Setup Request form has been received (sequence Seq 60).

Furthermore, similarly to the case of the usual attach processing, when receiving information (Uplink Information) on an uplink direction of the radio line that goes to the radio base station eNodeB 26 side from the mobile station UE 27 as an RRC UL Information Transfer signal (sequence Seq 61), the radio base station eNodeB 26 sends to the mobile management node MME 22 an EMM Attach Complete signal that indicates that the attach processing has been completed (sequence Seq 62). The mobile management node MME 22 that has received the EMM Attach Complete signal sends an EMM Information signal to the mobile station UE 27 through the radio base station eNodeB 26 (sequence Seq 63).

As described above, the mobile management node MME 22 that has received the usual attach request from the mobile terminal, i.e., the mobile station UE 27 becomes a state of performing communication using the communication session held previous time as it is without carrying out the usual attach processing of the core network side.

### (Third operation example)

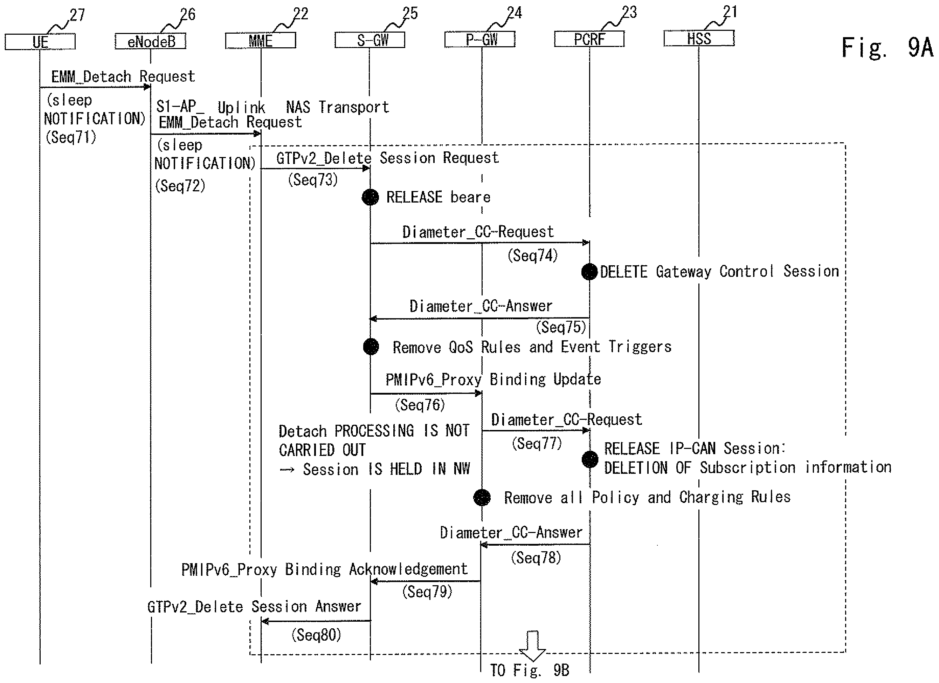

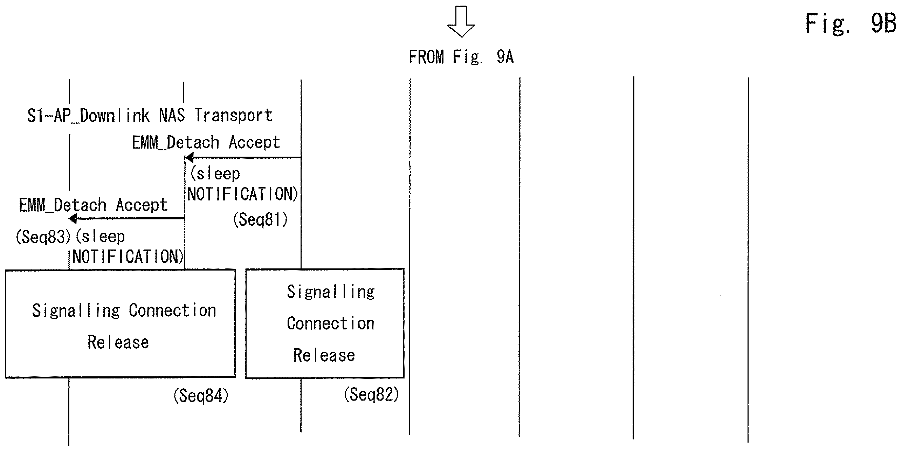

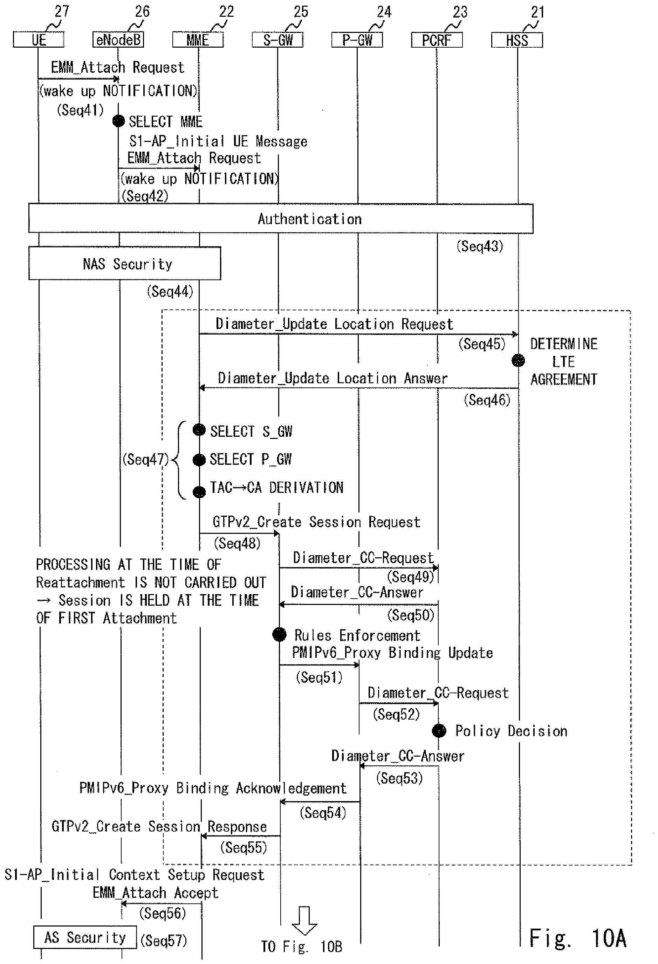

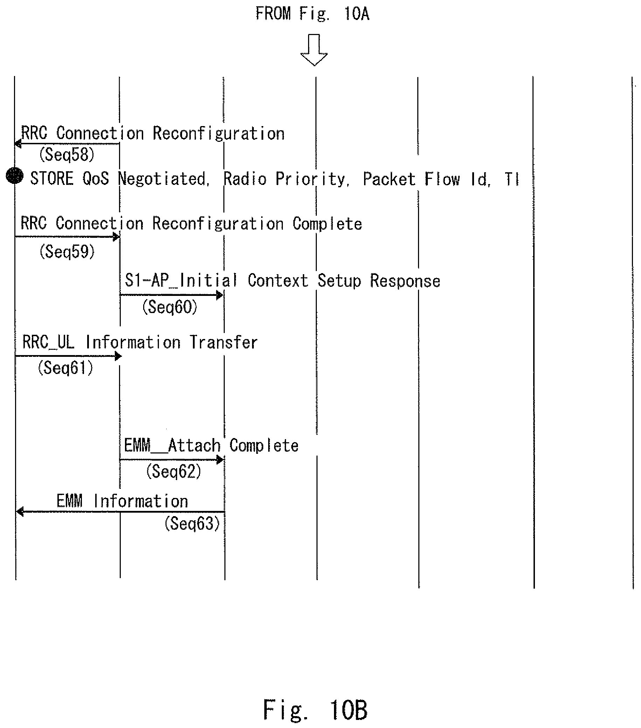

Next, using sequence charts of Figs. 9 and 10, will be explained an example of the operation of the mobile communication network system of the E-UTRAN scheme shown in Fig. 2, the example being different from the second embodiment. Also in the third operation example, it is possible to reduce the attach/detach processing of the core network (core node) side similarly to the case of the second embodiment as the mobile communication network system of the E-UTRAN scheme. Here, in the case of the sequence chart of Fig. 7 of the second operation example, the case has been shown where in receiving the EMM Detach Request signal (detach request signal) that requests detach from the mobile terminal, i.e., the mobile station UE 27 via the radio base station eNodeB 26 in sequence Seq 72, the mobile management node MME 22 determines whether or not the mobile terminal, i.e., the mobile station UE 27, is the mobile terminal as the target of the attach/detach processing reduction by referring to the terminal information or the subscriber information etc. in which the attributes of the mobile terminal have been registered.

However, in the sequence charts of Figs. 9A and 9B of the third operation example, in the mobile communication network system of the E-UTRAN scheme, information that indicates whether or not the mobile station UE 27 is the mobile terminal as a target of attach/detach processing reduction is added as a parameter to an EMM Detach Request signal (detach request signal) sent to the radio base station eNodeB 26 from the mobile terminal, i.e., the mobile station UE 27. Furthermore, a case is shown where in receiving the EMM Detach Request signal (detach request signal) that requests detach from the mobile terminal, i.e., the mobile station UE 27 via the radio base station eNodeB 26 in sequence Seq 72, the mobile management node MME 22 determines whether or not the mobile terminal, i.e., the mobile station UE 27, is the mobile terminal as the target of the attach/detach processing reduction by referring to the parameter added to the received EMM Detach Request signal.

Figs. 9A and 9B are sequence charts showing an example of the operation in the case of omitting the usual detach processing of the core network side when the detach request signal has been sent from the mobile station UE 27 in the mobile communication network system of Fig. 2, the example being different from Fig. 7. Figs. 10A and 10B are sequence charts showing one example of operation in a case of omitting the usual attach processing of the core network side when an attach request signal has been sent from mobile station UE 27 after omission of the detach processing of Figs. 9A and 9B in the mobile communication network system of Fig. 2. It is to be noted that as in the case of the first attach request etc., operation in the case of carrying out the usual attach processing shall be completely similar to the operation of the sequence charts of Figs. 6A and 6B of the second operation example.

Next, using the sequence charts of Figs. 9A and 9B, will be explained one example of the operation in a case of omitting the usual detach processing of the core network side even though a detach request is generated from the mobile station UE 27 in a state where the attach processing has been executed in Figs. 6A and 6B.

The mobile station UE 27 sets a radio control link through which a control signal is transmitted and received to and from the radio base station eNodeB 26, and sends to the radio base station eNodeB 26 an EMM Detach Request signal (detach request signal) that requests detach for the mobile management node MME 22 (sequence Seq 71). Here, unlike the case of the EMM Detach Request signal in sequence Seq71 of Fig. 7, a sleep notification that indicates that a power source of the mobile station UE 27 transitions to a sleep state is added to the EMM Detach Request signal as a parameter that indicates that the mobile station UE 27 is the mobile terminal as the target of detach processing reduction.

When an EMM Detach Request signal of the S1-AP_Uplink NAS Transport form is sent from the radio base station eNodeB 26 that has received the EMM Detach Request signal (sequence Seq 72), the mobile management node MME 22 confirms whether or not the sleep notification is added to the received EMM Detach Request signal as the parameter that indicates that the mobile station UE 27 is the mobile terminal as the target of the detach processing reduction.

If the sleep notification is not added to the received EMM Detach Request signal, it is a case of carrying out the usual detach processing of the core network side, and the mobile management node MME 22 carries out a detach procedure of the core network side including sequences Seq 73 to Seq 80 of Fig. 9A (completely the same sequences as sequences Seq 73 to Seq 80 of Fig. 7).

If the sleep notification is added to the received EMM Detach Request signal, it is a case where the usual detach processing of the core network side can be omitted, and the mobile management node MME 22 omits the detach procedure of the core network side including sequences Seq 73 to Seq 80 of Fig. 9A (completely the same sequences as sequences Seq 73 to Seq 80 of Fig. 7), and processing proceeds to sequence Seq 81, remaining in the state of holding a communication session (Session). The mobile management node MME 22 then sends to the radio base station eNodeB 26 of which the mobile station UE 27 as the request source is in the service area the EMM Detach Accept signal to which the sleep notification has been additionally added as the parameter that indicates that the detach processing of the core network side has not been carried out (sequence Seq 81). After that, the radio base station eNodeB 26 sends an EMM Detach Accept signal to the mobile station UE 27 as the request source (sequence Seq 83).

Accordingly, also after that, similarly to the case of the second operation example, the core network side including the mobile management node MME 22 does not transition to a state of Signalling Connection Release of sequence Seq 82, and only a radio block for accessing the core network transitions to the state of Signalling Connection Release, with session information of the mobile terminal, i.e., the mobile station UE 27 being continued to be held. Radio resources between the mobile station UE 27 and the radio base station eNodeB 26 are hereby released, and connection of a signal for packet service of the mobile station UE 27 with the core network side is opened (sequence Seq 84). That is, as for the radio resources between the mobile station UE 27 and the radio base station eNodeB 26, establishment/release is certainly carried out in each time of attach/detach processing regardless of omission of the detach processing of the core network side.

It is to be noted that when only the radio block for accessing the core network transitions to the state of Signalling Connection Release, remaining in the state of holding the communication session (Session) in the core network side, in order to prevent release failure of the communication session of the network side, similarly to the case of the second operation example, in sequence Seq 81, the mobile management node MME 22 sets to a session holding timer a time a little longer by a predetermined time than a generation interval of a reattach/redetach request from the mobile terminal, i.e., the mobile station UE 27 as a time to wait for forced release of the session.

After that, when the session holding timer expires, for example, when the reattach/redetach request from the mobile terminal, i.e., the mobile station UE 27, is not generated once a day, the mobile management node MME 22 carries out the usual detach processing of sequences Seq 73 to Seq 80, deletes information on the communication session of the mobile station UE 27 that has been held in the core network side including the mobile management node MME 22, and releases the session.

Furthermore, when sending the EMM Detach Accept signal to which the parameter of the sleep notification has been added to the radio base station eNodeB 26 of which the mobile station UE 27 as the request source is in the service area without carrying out the detach processing, similarly to the second operation example, the mobile management node MME 22 stops a periodic TAU (Tracking Area Update) waiting timer that is the timer for periodically updating a location registration area, and also cancels a subsequent paging request until a reattach request from the mobile station UE 27 is generated, or the session holding timer expires.

Next, using sequence charts of Figs. 10A and 10B, will be explained one example of operation in a case of omitting the usual attach processing of the core network side when an attach request is generated from the mobile station UE 27 in a state where the detach processing is omitted in Figs. 9A and 9B. When the attach request is generated from the mobile station UE 27, usually, attach processing as illustrated in Figs. 6A and 6B is carried out, but when generated is the attach request from the mobile station UE 27 in the state where the detach processing is omitted, as shown in Fig. 10A, similarly to the case of the second operation example, the usual attach processing of the core network side is omitted, and processing of sequences Seq 45 to Seq 55 is omitted.

Here, the mobile terminal, i.e., the mobile station UE 27 adds a wake up notification that indicates that the power source of the mobile station UE 27 transitions to a wake up state to an EMM Attach Request signal as a parameter that indicates that the mobile station UE 27 is the mobile terminal as a target of attach processing reduction. In such a case, the mobile terminal, i.e., the mobile station UE 27, holds an old Security context allocated at the time of the last attach processing, and transmits the EMM Attach Request signal (attach request signal) using the held old Security context to the radio base station eNodeB 26 (sequence Seq 41). Accordingly, the radio base station eNodeB 26 adds the wake up notification as the parameter that indicates that the mobile station UE 27 is the mobile terminal as the target of the attach processing reduction, and sends to the mobile management node MME 22 the EMM Attach Request signal using the old Security context (sequence Seq 42).

The mobile management node MME 22 adds as the parameter the wake up notification sent from the mobile station UE 27 through the radio base station eNodeB 26. Furthermore, when receiving the EMM Attach Request signal using the old Security context, the mobile management node MME 22 determines whether or not the mobile station UE 27 is the mobile terminal for which the detach processing to the communication session in having performed the attach processing previous time was omitted as a result of analyzing the EMM Attach Request signal. If determining that the EMM Attach Request signal is a reattach request from the mobile station UE 27 for which the detach processing was omitted, similarly to the second operation example, the mobile management node MME 22 omits to carry out security processing, such as authentication as the core network regarding the mobile station UE 27 as the request source, secret processing, and integrity, and continues to use the old Security context as it is (sequences Seq 43 and 44).

Furthermore, the mobile management node MME 22 omits attach processing of the core network side of sequences Seq 45 to Seq 55, adds a wake up notification as a parameter that indicates that the attach processing of the core network side has not been carried out, and sends to the radio base station eNodeB 26 of which the mobile station UE 27 as the request source is in the service area an EMM Attach Accept signal of the S1-AP_Initial Context Setup Request form that indicates that the reattach processing requested from the mobile station UE 27 has been completed (sequence Seq 56). After that, after carrying out setting processing of a radio line for accessing the core network with respect to the mobile station UE 27 as the request source by a procedure similar to the usual attach processing, the radio base station eNodeB 26 sends to the mobile management node MME 22 from the radio base station eNodeB 26 an S1-AP_Initial Context Setup Response signal that indicates that the EMM Attach Accept signal of the S1-AP_Initial Context Setup Request form has been received (sequence Seq 60).

Furthermore, similarly to the case of the usual attach processing, when receiving information (Uplink Information) on an uplink direction of the radio line that goes to the radio base station eNodeB 26 side from the mobile station UE 27 as an RRC UL Information Transfer signal (sequence Seq 61), the radio base station eNodeB 26 sends to the mobile management node MME 22 an EMM Attach Complete signal that indicates that the attach processing has been completed (sequence Seq 62). The mobile management node MME 22 that has received the EMM Attach Complete signal sends an EMM Information signal to the mobile station UE 27 through the radio base station eNodeB 26 (sequence Seq 63).

As described above, as information to determine whether or not the mobile terminal, i.e., the mobile station UE 27, is the mobile terminal as the target of the attach/detach processing reduction, also in the third operation example using the parameters (the sleep notification and the wake up notification) added to the detach/attach request signal, similarly to the case of the second operation example where the information that indicates the attributes of the terminal, such as the terminal information and the subscriber information of the mobile terminal, i.e., the mobile station UE 27, at the time of the detach/attach request, the mobile management node MME 22 that has received the usual attach request from the mobile terminal, i.e., the mobile station UE 27, becomes the state of performing communication using the communication session held last time as it is without carrying out the usual attach processing of the core network side.

### (Explanation of effect of embodiment)

As explained in detail above, the following effect can be obtained in the above exemplary embodiments, the present invention is not limited thereto. The present invention may be implemented by causing a CPU (Central Processing Unit) to execute a computer program to perform a given process.

Further, the above-described program can be stored and provided to the computer using any type of non-transitory computer readable medium. The non-transitory computer readable medium includes any type of tangible storage medium. Examples of the non-transitory computer readable medium include magnetic storage media (such as floppy disks, magnetic tapes, hard disk drives, etc.), optical magnetic storage media (e.g. magneto-optical disks), CD-ROM (Read Only Memory), CD-R , CD-R/W, and semiconductor memories (such as mask ROM, PROM (Programmable ROM), EPROM (Erasable PROM), flash ROM, RAM (Random Access Memory), etc.). The program may be provided to a computer using any type of transitory computer readable medium. Examples of the transitory computer readable medium include electric signals, optical signals, and electromagnetic waves. The transitory computer readable medium can provide the program to a computer via a wired communication line such as an electric wire or optical fiber or a wireless communication line.

### Reference Signs List

11 Subscriber Information Management Device HLR (Home Location Register)
12 Subscriber Location Register VLR (Visitor Location Register)
13 Packet Switch SGSN (Serving GPRS (General Packet Radio Service) Support Node)
14 Gateway Packet Switch GGSN (Gateway GPRS Support Node)
15 Radio Line Control Station RNC (Radio Network Controller)
16 Mobile Station MS (Mobile Station)
21 Subscriber Information Management Device HSS (Home Subscriber Server)
22 Mobile Management Node MME (Mobility Management Entity)
23 Subscriber Policy/Charging Rule Management Device PCRF (Policy and Charging Rules Function)
24 PDN Gateway Device P-GW (PDN Gateway)
25 Relay Gateway Device S-GW (Serving Gateway)
26 Radio Base Station eNodeB (Enhanced Node B)
27 Mobile Station UE (User Equipment)

## Claims

1. A mobile communication network system comprising a core network accessed from a mobile terminal (16, 27), wherein
when a detach request signal, that requests detach, is received from the mobile terminal (16, 27), a mobile management node (22), arranged on the core network side in order to perform management control of mobile communication, is arranged to release resources between the mobile terminal (16, 27) and a radio base station eNodeB (26), and hold a communication session of the core network side set when the mobile terminal (16, 27) is attached, and
when an attach request signal, that requests attach, is received from the mobile terminal (16, 27) after receiving the detach request signal, the mobile management node (22) is arranged to use the held communication session of the core network side, and to send an EMM Attach Accept signal of the S1-AP_Initial Context Setup Request form to the radio base station eNodeB (26),
wherein the mobile management node (22) is arranged to determine whether or not attach processing of the core network side is omitted depending on a wake up notification, that indicates that the power source of the mobile terminal (16, 27) has transitioned to a wake up state from a sleep state at the time of attach, added to the attach request signal and to determine whether or not detach processing of the core network side is omitted depending on a sleep notification, that indicates that a power source of the mobile terminal (16, 27) transitions to a sleep state at the time of detach, added to the detach request signal,
wherein when receiving the detach request signal from the mobile terminal (16, 27), and omitting the detach processing of the core network side, the mobile management node (22) sets to a session holding timer a time longer by a predetermined time than a generation interval of a reattach/redetach request from the mobile terminal (16, 27) as a time to wait for forced release of the held communication session, and when the session holding timer expires without receiving the attach request signal from the mobile terminal (16, 27), the mobile management node (22) deletes information on the held communication session by making usual detach processing of the core network side carried out, and forcibly releases the communication session.

2. The mobile communication network system according to Claim 1 wherein a mobile management node arranged on the core network side in order to perform management control of mobile communication is a Mobility Management Entity, MME (22).

3. A communication control method used in a mobile communication network system comprising a core network accessed from a mobile terminal (16, 27),
wherein
when a detach request signal, that requests detach, is received from the mobile terminal (16, 27), a mobile management node (22), arranged on the core network side in order to perform management control of mobile communication, releases radio resources between the mobile terminal (16, 27) and a radio base station eNodeB (26), and holds a communication session of the core network side set when the mobile terminal (16, 27) is attached, and
when an attach request signal, that requests attach, is received from the mobile terminal (16, 27) after receiving the detach request signal, the mobile management node uses the held communication session of the core network side, and sends an EMM Attach Accept signal of the S1-AP_Initial Context Setup Request form to the radio base station eNodeB (26),
wherein the mobile management node (22) determines whether or not attach processing of the core network side is omitted depending on a wake up notification, that indicates that the power source of the mobile terminal (16, 27) has transitioned to a wake up state from a sleep state at the time of attach, added to the attach request signal and determines whether or not detach processing of the core network side is omitted depending on a sleep notification, that indicates that a power source of the mobile terminal (16, 27) transitions to a sleep state at the time of detach, added to the detach request signal,
wherein when receiving the detach request signal from the mobile terminal (16, 27), and omitting the detach processing of the core network side, the mobile management node (22) sets to a session holding timer a time longer by a predetermined time than a generation interval of a reattach/redetach request from the mobile terminal (16, 27) as a time to wait for forced release of the held communication session, and after that, when the session holding timer expires without receiving the attach request signal from the mobile terminal (16, 27), the mobile management node (22) deletes information on the held communication session by making usual detach processing of the core network side carried out, and forcibly releases the communication session.

4. A non-transitory computer readable medium storing a mobile terminal attach/detach processing program for making a computer provided at a mobile management node (22) arranged on the core network side in order to perform management control of mobile communication execute the communication control method according to Claim 3.

5. A mobile management node (22) installed in a core network, and configured:
to perform management control of mobile communication and to receive a detach request signal, that requests detach, from a mobile terminal (16, 27) and an attach request signal, that requests attach, from the mobile terminal (16, 27), wherein
when receiving the detach request signal from the mobile terminal (16, 27), the mobile management node (22) is arranged to release radio resources between the mobile terminal (16, 27) and a radio base station eNodeB (26), while holding a communication session set in the core network,
when receiving the attach request signal from the mobile terminal (16, 27), after receiving the detach request signal, the mobile management node (22) is arranged to use the communication session held in the core network and to send an EMM Attach Accept signal of the S1-AP_Initial Context Setup Request form to the radio base station eNodeB (26); and
wherein the mobile management node (22) is arranged to determine whether or not to omit attach processing in the core network depending on a wake up notification, that indicates that the power source of the mobile terminal (16, 27) has transitioned to a wake up state from a sleep state at the time of attach, added to the attach request signal and to determine whether or not to omit detach processing in the core network depending on a sleep notification, that indicates that the power source of the mobile terminal (16, 27) transitions to a sleep state at the time of detach, added to the detach request signal
wherein when receiving the detach request signal from the mobile terminal (16, 27), and omitting the detach processing of the core network side, the mobile management node (22) sets to a session holding timer a time longer by a predetermined time than a generation interval of a reattach/redetach request from the mobile terminal (16, 27) as a time to wait for forced release of the held communication session, and when the session holding timer expires without receiving the attach request signal from the mobile terminal (16, 27), the mobile management node (22) deletes information on the held communication session by making usual detach processing of the core network side carried out, and forcibly releases the communication session.

6. The mobile management node according to claim 5, wherein the mobile management node is a Mobility Management Entity, MME (22).

7. A mobile communication network system comprising a core network accessed from a mobile terminal (16, 27), wherein
when a detach request signal, that requests detach, is received from the mobile terminal (16, 27), a mobile management node (13), arranged on the core network side in order to perform management control of mobile communication, is arranged to release radio resources between the mobile terminal (16, 27) and a radio line control station RNC (15), and hold a communication session of the core network side set when the mobile terminal (16, 27) is attached, and
when an attach request signal, that requests attach, is received from the mobile terminal (16, 27) after receiving the detach request signal, the mobile management node (13) is arranged to use the held communication session of the core network side, and to set-up a radio access bearer, Radio Access Bearer Setup, among the mobile station MS (16), the radio line control station RNC (15), and a packet switch SGSN (1),
wherein the mobile management node (13) is arranged to determine whether or not attach processing of the core network side is omitted depending on a wake up notification, that indicates that the power source of the mobile terminal (16, 27) has transitioned to a wake up state from a sleep state at the time of attach, added to the attach request signal and to determine whether or not detach processing of the core network side is omitted depending on a sleep notification, that indicates that a power source of the mobile terminal (16, 27) transitions to a sleep state at the time of detach, added to the detach request signal,
wherein when receiving the detach request signal from the mobile terminal (16, 27), and omitting the detach processing of the core network side, the mobile management node (13) sets to a session holding timer a time longer by a predetermined time than a generation interval of a reattach/redetach request from the mobile terminal (16, 27) as a time to wait for forced release of the held communication session, and when the session holding timer expires without receiving the attach request signal from the mobile terminal (16, 27), the mobile management node (13) deletes information on the held communication session by making usual detach processing of the core network side carried out, and forcibly releases the communication session.

8. The mobile communication network system according to Claim 7, wherein a mobile management node arranged on the core network side in order to perform management control of mobile communication is a packet switch Serving General Packet Radio Service, GPRS, Support Node, SGSN (13).

9. A communication control method used in a mobile communication network system comprising a core network accessed from a mobile terminal (16, 27),
wherein
when a detach request signal, that requests detach, is received from the mobile terminal (16, 27), a mobile management node (13), arranged on the core network side in order to perform management control of mobile communication, is releases the radio resources between the mobile terminal (16, 27) and a radio line control station RNC (15), and holds a communication session of the core network side set when the mobile terminal (16, 27) is attached, and
when an attach request signal, that requests attach, is received from the mobile terminal (16, 27) after receiving the detach request signal, the mobile management node uses the held communication session of the core network side, and sets-up a radio control link access bearer, Radio Access Bearer Setup, among the mobile station MS (16), the radio line control station RNC (15), and a packet switch SGSN (1),
wherein the mobile management node (13) determines whether or not attach processing of the core network side is omitted depending on a wake up notification, that indicates that the power source of the mobile terminal (16, 27) has transitioned to a wake up state from a sleep state at the time of attach, added to the attach request signal and determines whether or not detach processing of the core network side is omitted depending on a sleep notification, that indicates that a power source of the mobile terminal (16, 27) transitions to a sleep state at the time of detach, added to the detach request signal,
wherein when receiving the detach request signal from the mobile terminal (16, 27), and omitting the detach processing of the core network side, the mobile management node (13) sets to a session holding timer a time longer by a predetermined time than a generation interval of a reattach/redetach request from the mobile terminal (16, 27) as a time to wait for forced release of the held communication session, and after that, when the session holding timer expires without receiving the attach request signal from the mobile terminal (16, 27), the mobile management node (13) deletes information on the held communication session by making usual detach processing of the core network side carried out, and forcibly releases the communication session.

10. A mobile management node (13) installed in a core network of a mobile communication system, and configured:
to perform management control of mobile communication and to receive a detach request signal, that requests detach, from a mobile terminal (16, 27) and an attach request signal, that requests attach, from the mobile terminal (16, 27), wherein
when receiving the detach request signal from the mobile terminal (16, 27), the mobile management node (13) is arranged to release radio resources between the mobile terminal (16, 27) and a radio line control station RNC (15), while holding a communication session set in the core network,
when receiving the attach request signal from the mobile terminal (16, 27), after receiving the detach request signal, the mobile management node (13) is arranged to use the communication session held in the core network and to set-up a radio access bearer, Radio Access Bearer Setup, among the mobile station MS (16), the radio line control station RNC (15), and a packet switch SGSN (1); and
wherein the mobile management node (13) is arranged to determine whether or not to omit attach processing in the core network depending on a wake up notification, that indicates that the power source of the mobile terminal (16, 27) has transitioned to a wake up state from a sleep state at the time of attach, added to the attach request signal and to determine whether or not to omit detach processing in the core network depending on a sleep notification, that indicates that the power source of the mobile terminal (16, 27) transitions to a sleep state at the time of detach, added to the detach request signal
wherein when receiving the detach request signal from the mobile terminal (16, 27), and omitting the detach processing of the core network side, the mobile management node (13) sets to a session holding timer a time longer by a predetermined time than a generation interval of a reattach/redetach request from the mobile terminal (16, 27) as a time to wait for forced release of the held communication session, and when the session holding timer expires without receiving the attach request signal from the mobile terminal (16, 27), the mobile management node (13) deletes information on the held communication session by making usual detach processing of the core network side carried out, and forcibly releases the communication session.

11. The mobile management node according to claim 10, wherein the mobile management node is a Serving GPRS Support Node, SGSN (13).

## Patentansprüche

1. Mobilkommunikationsnetzwerksystem, das ein Kernnetzwerk aufweist, auf das von einem mobilen Endgerät (16, 27) zugegriffen wird, wobei
wenn ein Abmeldungsanforderungssignal, das die Abmeldung anfordert, von dem mobilen Endgerät (16, 27) empfangen wird, ein Mobilitätsverwaltungsknoten (22), der auf der Kernnetzwerkseite eingerichtet ist, um die Verwaltungssteuerung der Mobilkommunikation durchzuführen, eingerichtet ist, um Ressourcen zwischen dem mobilen Endgerät (16, 27) und einer Funkbasisstation eNodeB (26) freizugeben und eine Kommunikationssitzung der Kernnetzwerkseite eingerichtet zu halten, wenn das mobile Endgerät (16, 27) eingebucht wird, und
der Mobilitätsverwaltungsknoten (22), wenn nach dem Empfang des Abmeldungsanforderungssignals ein Einbuchungsanforderungssignal, das die Einbuchung anfordert, von dem mobilen Endgerät (16, 27) empfangen wird, eingerichtet ist, um die gehaltene Kommunikationssitzung der Kernnetzwerkseite zu verwenden und ein EEM-Einbuchungsannahmesignal in der Form einer S1-AP_Initial Context Setup Request an die Funkbasisstation eNodeB (26) zu senden,
wobei der Mobilitätsverwaltungsknoten (22) eingerichtet ist, um abhängig von einer Aufweckbenachrichtigung, die anzeigt, dass die Leistungsquelle des mobilen Endgeräts (16, 27) zur Zeit der Einbuchung von einem Ruhezustand in einen Aufwachzustand übergegangen ist, welche zu dem Einbuchungsanforderungssignal hinzugefügt ist, zu bestimmen, ob die Einbuchungsverarbeitung der Kernnetzwerkseite weggelassen werden soll oder nicht, und abhängig von einer Ruhebenachrichtigung, die anzeigt, dass eine Leistungsquelle des mobilen Endgeräts (16, 27) zur Zeit der Abmeldung in einen Ruhezustand übergeht, welche zu dem Abmeldungsanforderungssignal hinzugefügt ist, zu bestimmen, ob die Abmeldungsverarbeitung der Kernnetzwerkseite weggelassen werden soll oder nicht,
wobei der Mobilitätsverwaltungsknoten (22), wenn das Abmeldungsanforderungssignal von dem mobilen Endgerät (16, 27) empfangen wird und die Abmeldungsverarbeitung der Kernnetzwerkseite weggelassen wird, einen Timer für das Halten der Sitzung auf eine um eine vorgegebene Zeit längere Zeit als ein Erzeugungsintervall einer Wiedereinbuchungs-/Wiederabmeldungsanforderung von dem mobilen Endgerät (16, 27) als eine Zeit für das Warten auf einen erzwungenen Abbau der gehaltenen Kommunikationssitzung festlegt und der Mobilitätsverwaltungsknoten (22), wenn der Timer für das Halten der Sitzung abläuft, ohne dass das Einbuchungsanforderungssignal von dem mobilen Endgerät (16, 27) empfangen wird, Informationen über die gehaltene Kommunikationssitzung löscht, indem er die gewöhnliche Abmeldungsverarbeitung der Kernnetzwerkseite ausführen lässt und die Kommunikationssitzung zwangsweise abbaut.

2. Mobilkommunikationsnetzwerksystem nach Anspruch 1, wobei ein Mobilitätsverwaltungsknoten, der auf der Kernnetzwerkseite eingerichtet ist, um die Verwaltungssteuerung der Mobilkommunikation durchzuführen, eine Mobilitätsverwaltungseinheit MME (22) ist.

3. Kommunikationssteuerverfahren, das in einem Mobilkommunikationsnetzwerksystem verwendet wird, das ein Kernnetzwerk aufweist, auf das von einem mobilen Endgerät (16, 27) zugegriffen wird, wobei
wenn ein Abmeldungsanforderungssignal, das die Abmeldung anfordert, von dem mobilen Endgerät (16, 27) empfangen wird, ein Mobilitätsverwaltungsknoten (22), der auf der Kernnetzwerkseite eingerichtet ist, um die Verwaltungssteuerung der Mobilkommunikation durchzuführen, Funkressourcen zwischen dem mobilen Endgerät (16, 27) und einer Funkbasisstation eNodeB (26) freigibt und eine Kommunikationssitzung der Kernnetzwerkseite eingerichtet hält, wenn das mobile Endgerät (16, 27) eingebucht wird, und
der Mobilitätsverwaltungsknoten, wenn nach dem Empfang des Abmeldungsanforderungssignals ein Einbuchungsanforderungssignal, das die Einbuchung anfordert, von dem mobilen Endgerät (16, 27) empfangen wird, die gehaltene Kommunikationssitzung der Kernnetzwerkseite verwendet und ein EEM-Einbuchungsannahmesignal in der Form einer S1-AP_Initial Context Setup Request an die Funkbasisstation eNodeB (26) sendet,
wobei der Mobilitätsverwaltungsknoten (22) abhängig von einer Aufweckbenachrichtigung, die anzeigt, dass die Leistungsquelle des mobilen Endgeräts (16, 27) zur Zeit der Einbuchung von einem Ruhezustand in einen Aufwachzustand übergegangen ist, welche zu dem Einbuchungsanforderungssignal hinzugefügt ist, bestimmt, ob die Einbuchungsverarbeitung der Kernnetzwerkseite weggelassen werden soll oder nicht, und abhängig von einer Ruhebenachrichtigung, die anzeigt, dass eine Leistungsquelle des mobilen Endgeräts (16, 27) zur Zeit der Abmeldung in einen Ruhezustand übergeht, welche zu dem Abmeldungsanforderungssignal hinzugefügt ist, bestimmt, ob die Abmeldungsverarbeitung der Kernnetzwerkseite weggelassen werden soll oder nicht,
wobei der Mobilitätsverwaltungsknoten (22), wenn das Abmeldungsanforderungssignal von dem mobilen Endgerät (16, 27) empfangen wird und die Abmeldungsverarbeitung der Kernnetzwerkseite weggelassen wird, einen Timer für das Halten der Sitzung auf eine um eine vorgegebene Zeit längere Zeit als ein Erzeugungsintervall einer Wiedereinbuchungs-/Wiederabmeldungsanforderung von dem mobilen Endgerät (16, 27) als eine Zeit für das Warten auf einen erzwungenen Abbau der gehaltenen Kommunikationssitzung festlegt und der Mobilitätsverwaltungsknoten (22) danach, wenn der Timer für das Halten der Sitzung abläuft, ohne dass das Einbuchungsanforderungssignal von dem mobilen Endgerät (16, 27) empfangen wird, Informationen über die gehaltene Kommunikationssitzung löscht, indem er die gewöhnliche Abmeldungsverarbeitung der Kernnetzwerkseite ausführen lässt und die Kommunikationssitzung zwangsweise abbaut.

4. Dauerhaftes computerlesbares Medium, das ein Verarbeitungsprogramm für das Einbuchen/Abmelden eines mobilen Endgeräts speichert, um einen Computer, der an einem auf der Kernnetzwerkseite eingerichteten Mobilitätsverwaltungsknoten (22) bereitgestellt ist, dazu zu bringen, die Verwaltungssteuerung der Mobilkommunikation durchzuführen, um das Kommunikationssteuerverfahren nach Anspruch 3 auszuführen.

5. Mobilitätsverwaltungsknoten (22), der in einem Kernnetzwerk installiert ist, und konfiguriert ist, um:
die Verwaltungssteuerung einer Mobilkommunikation durchzuführen und ein Abmeldungsanforderungssignal, das die Abmeldung anfordert, von einem mobilen Endgerät (16, 27) und ein Einbuchungsanforderungssignal, das die Einbuchung anfordert, von dem mobilen Endgerät (16, 27) zu empfangen, wobei
wenn das Abmeldungsanforderungssignal von dem mobilen Endgerät (16, 27) empfangen wird, der Mobilitätsverwaltungsknoten (22) eingerichtet ist, um Funkressourcen zwischen dem mobilen Endgerät (16, 27) und einer Funkbasisstation eNodeB (26) freizugeben, während eine Kommunikationssitzung auf der Kernnetzwerkseite eingerichtet gehalten wird,
der Mobilitätsverwaltungsknoten (22), wenn nach dem Empfang des Abmeldungsanforderungssignals das Einbuchungsanforderungssignal von dem mobilen Endgerät (16, 27) empfangen wird, eingerichtet ist, um die in dem Kernnetzwerk gehaltene Kommunikationssitzung zu verwenden und ein EEM-Einbuchungsannahmesignal in der Form einer S1-AP_Initial Context Setup Request an die Funkbasisstation eNodeB (26) zu senden; und
wobei der Mobilitätsverwaltungsknoten (22) eingerichtet ist, um abhängig von einer Aufweckbenachrichtigung, die anzeigt, dass die Leistungsquelle des mobilen Endgeräts (16, 27) zur Zeit der Einbuchung von einem Ruhezustand in einen Aufwachzustand übergegangen ist, welche zu dem Einbuchungsanforderungssignal hinzugefügt ist, zu bestimmen, ob die Einbuchungsverarbeitung in dem Kernnetzwerk weggelassen werden soll oder nicht, und abhängig von einer Ruhebenachrichtigung, die anzeigt, dass die Leistungsquelle des mobilen Endgeräts (16, 27) zur Zeit der Abmeldung in einen Ruhezustand übergeht, welche zu dem Abmeldungsanforderungssignal hinzugefügt ist, zu bestimmen, ob die Abmeldungsverarbeitung der Kernnetzwerkseite weggelassen werden soll oder nicht,
wobei der Mobilitätsverwaltungsknoten (22), wenn das Abmeldungsanforderungssignal von dem mobilen Endgerät (16, 27) empfangen wird und die Abmeldungsverarbeitung der Kernnetzwerkseite weggelassen wird, einen Timer für das Halten der Sitzung auf eine um eine vorgegebene Zeit längere Zeit als ein Erzeugungsintervall einer Wiedereinbuchungs-/Wiederabmeldungsanforderung von dem mobilen Endgerät (16, 27) als eine Zeit für das Warten auf einen erzwungenen Abbau der gehaltenen Kommunikationssitzung festlegt und der Mobilitätsverwaltungsknoten (22), wenn der Timer für das Halten der Sitzung abläuft, ohne dass das Einbuchungsanforderungssignal von dem mobilen Endgerät (16, 27) empfangen wird, Informationen über die gehaltene Kommunikationssitzung löscht, indem er die gewöhnliche Abmeldungsverarbeitung der Kernnetzwerkseite ausführen lässt und die Kommunikationssitzung zwangsweise abbaut.

6. Mobilitätsverwaltungsknoten nach Anspruch 5, wobei der Mobilitätsverwaltungsknoten eine Mobilitätsverwaltungseinheit MME (22) ist.

7. Mobilkommunikationsnetzwerksystem, das ein Kernnetzwerk aufweist, auf das von einem mobilen Endgerät (16, 27) zugegriffen wird, wobei
wenn ein Abmeldungsanforderungssignal, das die Abmeldung anfordert, von dem mobilen Endgerät (16, 27) empfangen wird, ein Mobilitätsverwaltungsknoten (13), der auf der Kernnetzwerkseite eingerichtet ist, um die Verwaltungssteuerung der Mobilkommunikation durchzuführen, eingerichtet ist, um Funkressourcen zwischen dem mobilen Endgerät (16, 27) und einer Funkleitungssteuerstation RNC (15) freizugeben und eine Kommunikationssitzung der Kernnetzwerkseite eingerichtet zu halten, wenn das mobile Endgerät (16, 27) eingebucht wird, und
der Mobilitätsverwaltungsknoten (13), wenn nach dem Empfang des Abmeldungsanforderungssignals ein Einbuchungsanforderungssignal, das die Einbuchung anfordert, von dem mobilen Endgerät (16, 27) empfangen wird, eingerichtet ist, um die gehaltene Kommunikationssitzung der Kernnetzwerkseite zu verwenden und zwischen der Mobilstation MS (16), der Funkleitungssteuerstation RNC (15) und einer Paketvermittlung SGSN (1) einen Funkzugangsträger aufzubauen, Radio Access Bearer Setup,
wobei der Mobilitätsverwaltungsknoten (13) eingerichtet ist, um abhängig von einer Aufweckbenachrichtigung, die anzeigt, dass die Leistungsquelle des mobilen Endgeräts (16, 27) zur Zeit der Einbuchung von einem Ruhezustand in einen Aufwachzustand übergegangen ist, welche zu dem Einbuchungsanforderungssignal hinzugefügt ist, zu bestimmen, ob die Einbuchungsverarbeitung der Kernnetzwerkseite weggelassen werden soll oder nicht, und abhängig von einer Ruhebenachrichtigung, die anzeigt, dass, dass eine Leistungsquelle des mobilen Endgeräts (16, 27) zur Zeit der Abmeldung in einen Ruhezustand übergeht, welche zu dem Abmeldungsanforderungssignal hinzugefügt ist, zu bestimmen, ob die Abmeldungsverarbeitung der Kernnetzwerkseite weggelassen werden soll oder nicht,
wobei der Mobilitätsverwaltungsknoten (13), wenn das Abmeldungsanforderungssignal von dem mobilen Endgerät (16, 27) empfangen wird und die Abmeldungsverarbeitung der Kernnetzwerkseite weggelassen wird, einen Timer für das Halten der Sitzung auf eine um eine vorgegebene Zeit längere Zeit als ein Erzeugungsintervall einer Wiedereinbuchungs-/Wiederabmeldungsanforderung von dem mobilen Endgerät (16, 27) als eine Zeit für das Warten auf einen erzwungenen Abbau der gehaltenen Kommunikationssitzung festlegt und der Mobilitätsverwaltungsknoten (13), wenn der Timer für das Halten der Sitzung abläuft, ohne dass das Einbuchungsanforderungssignal von dem mobilen Endgerät (16, 27) empfangen wird, Informationen über die gehaltene Kommunikationssitzung löscht, indem er die gewöhnliche Abmeldungsverarbeitung der Kernnetzwerkseite ausführen lässt und die Kommunikationssitzung zwangsweise abbaut.

8. Mobilkommunikationsnetzwerksystem nach Anspruch 7, wobei ein Mobilitätsverwaltungsknoten, der auf der Kernnetzwerkseite eingerichtet ist, um die Verwaltungssteuerung der Mobilkommunikation durchzuführen, ein betreuender Paketvermittlungsunterstützungsknoten des allgemeinen Paketfunkdiensts GPRS, SGSN (13) ist.

9. Kommunikationssteuerverfahren, das in einem Mobilkommunikationsnetzwerksystem verwendet wird, das ein Kernnetzwerk aufweist, auf das von einem mobilen Endgerät (16, 27) zugegriffen wird, wobei
wenn ein Abmeldungsanforderungssignal, das die Abmeldung anfordert, von dem mobilen Endgerät (16, 27) empfangen wird, ein Mobilitätsverwaltungsknoten (13), der auf der Kernnetzwerkseite eingerichtet ist, um die Verwaltungssteuerung der Mobilkommunikation durchzuführen, die Funkressourcen zwischen dem mobilen Endgerät (16, 27) und einer Funkleitungssteuerstation RNC (15) freigibt und eine Kommunikationssitzung der Kernnetzwerkseite eingerichtet hält, wenn das mobile Endgerät (16, 27) eingebucht wird, und
der Mobilitätsverwaltungsknoten, wenn nach dem Empfang des Abmeldungsanforderungssignals ein Einbuchungsanforderungssignal, das die Einbuchung anfordert, von dem mobilen Endgerät (16, 27) empfangen wird, die gehaltene Kommunikationssitzung der Kernnetzwerkseite verwendet und zwischen der Mobilstation MS (16), der Funkleitungssteuerstation RNC (15) und einer Paketvermittlung SGSN (1) einen Funkzugangsträger aufbaut, Radio Access Bearer Setup,
wobei der Mobilitätsverwaltungsknoten (13) abhängig von einer Aufweckbenachrichtigung, die anzeigt, dass die Leistungsquelle des mobilen Endgeräts (16, 27) zur Zeit der Einbuchung von einem Ruhezustand in einen Aufwachzustand übergegangen ist, welche zu dem Einbuchungsanforderungssignal hinzugefügt ist, bestimmt, ob die Einbuchungsverarbeitung der Kernnetzwerkseite weggelassen werden soll oder nicht, und abhängig von einer Ruhebenachrichtigung, die anzeigt, dass eine Leistungsquelle des mobilen Endgeräts (16, 27) zur Zeit der Abmeldung in einen Ruhezustand übergeht, welche zu dem Abmeldungsanforderungssignal hinzugefügt ist, bestimmt, ob die Abmeldungsverarbeitung der Kernnetzwerkseite weggelassen werden soll oder nicht,
wobei der Mobilitätsverwaltungsknoten (13), wenn das Abmeldungsanforderungssignal von dem mobilen Endgerät (16, 27) empfangen wird und die Abmeldungsverarbeitung der Kernnetzwerkseite weggelassen wird, einen Timer für das Halten der Sitzung auf eine um eine vorgegebene Zeit längere Zeit als ein Erzeugungsintervall einer Wiedereinbuchungs-/Wiederabmeldungsanforderung von dem mobilen Endgerät (16, 27) als eine Zeit für das Warten auf einen erzwungenen Abbau der gehaltenen Kommunikationssitzung festlegt und der Mobilitätsverwaltungsknoten (13) danach, wenn der Timer für das Halten der Sitzung abläuft, ohne dass das Einbuchungsanforderungssignal von dem mobilen Endgerät (16, 27) empfangen wird, Informationen über die gehaltene Kommunikationssitzung löscht, indem er die gewöhnliche Abmeldungsverarbeitung der Kernnetzwerkseite ausführen lässt und die Kommunikationssitzung zwangsweise abbaut.

10. Mobilitätsverwaltungsknoten (13), der in einem Kernnetzwerk eines Mobilkommunikationssystems installiert ist, und konfiguriert ist, um:
die Verwaltungssteuerung einer Mobilkommunikation durchzuführen und ein Abmeldungsanforderungssignal, das die Abmeldung anfordert, von einem mobilen Endgerät (16, 27) und ein Einbuchungsanforderungssignal, das die Einbuchung anfordert, von dem mobilen Endgerät (16, 27) zu empfangen, wobei
wenn das Abmeldungsanforderungssignal von dem mobilen Endgerät (16, 27) empfangen wird, der Mobilitätsverwaltungsknoten (13) eingerichtet ist, um Funkressourcen zwischen dem mobilen Endgerät (16, 27) und einer Funkleitungssteuerstation RNC (15) freizugeben, während eine Kommunikationssitzung auf der Kernnetzwerkseite eingerichtet gehalten wird,
der Mobilitätsverwaltungsknoten (13), wenn nach dem Empfang des Abmeldungsanforderungssignals das Einbuchungsanforderungssignal von dem mobilen Endgerät (16, 27) empfangen wird, eingerichtet ist, um die in dem Kernnetzwerk gehaltene Kommunikationssitzung zu verwenden und zwischen der Mobilstation MS (16), der Funkleitungssteuerstation RNC (15) und einer Paketvermittlung SGSN (1) einen Funkzugangsträger aufzubauen, Radio Access Bearer Setup; und
wobei der Mobilitätsverwaltungsknoten (13) eingerichtet ist, um abhängig von einer Aufweckbenachrichtigung, die anzeigt, dass die Leistungsquelle des mobilen Endgeräts (16, 27) zur Zeit der Einbuchung von einem Ruhezustand in einen Aufwachzustand übergegangen ist, welche zu dem Einbuchungsanforderungssignal hinzugefügt ist, zu bestimmen, ob die Einbuchungsverarbeitung in dem Kernnetzwerk weggelassen werden soll oder nicht, und abhängig von einer Ruhebenachrichtigung, die anzeigt, dass die Leistungsquelle des mobilen Endgeräts (16, 27) zur Zeit der Abmeldung in einen Ruhezustand übergeht, welche zu dem Abmeldungsanforderungssignal hinzugefügt ist, zu bestimmen, ob die Abmeldungsverarbeitung der Kernnetzwerkseite weggelassen werden soll oder nicht,
wobei der Mobilitätsverwaltungsknoten (13), wenn das Abmeldungsanforderungssignal von dem mobilen Endgerät (16, 27) empfangen wird und die Abmeldungsverarbeitung der Kernnetzwerkseite weggelassen wird, einen Timer für das Halten der Sitzung auf eine um eine vorgegebene Zeit längere Zeit als ein Erzeugungsintervall einer Wiedereinbuchungs-/Wiederabmeldungsanforderung von dem mobilen Endgerät (16, 27) als eine Zeit für das Warten auf einen erzwungenen Abbau der gehaltenen Kommunikationssitzung festlegt und der Mobilitätsverwaltungsknoten (13), wenn der Timer für das Halten der Sitzung abläuft, ohne dass das Einbuchungsanforderungssignal von dem mobilen Endgerät (16, 27) empfangen wird, Informationen über die gehaltene Kommunikationssitzung löscht, indem er die gewöhnliche Abmeldungsverarbeitung der Kernnetzwerkseite ausführen lässt und die Kommunikationssitzung zwangsweise abbaut.

11. Mobilitätsverwaltungsknoten nach Anspruch 10, wobei der Mobilitätsverwaltungsknoten ein betreuender GPRS-Unterstützungsknoten SGSN (13) ist.

## Revendications

1. Système de réseau de communication mobile comprenant un réseau de noyau auquel un terminal mobile accède (16, 27), dans lequel
lorsqu'un signal de demande de détachement, qui demande un détachement, est reçu du terminal mobile (16, 27), un nœud de gestion mobile (22), agencé du côté de réseau de noyau afin d'effectuer une commande de gestion de communication mobile, est agencé pour libérer des ressources entre le terminal mobile (16, 27) et un eNodeB de station radio de base (26), et pour maintenir une session de communication du côté de réseau de noyau établie lorsque le terminal mobile (16, 27) est attaché, et
lorsqu'un signal de demande d'attachement, qui demande un attachement, est reçu du terminal mobile (16, 27) après la réception du signal de demande de détachement, le nœud de gestion mobile (22) est agencé pour utiliser la session de communication maintenue du côté de réseau de noyau, et pour envoyer un signal d'acceptation d'attachement d'EMM du formulaire de demande de configuration de contexte S1-AP_Initial à l'eNodeB de station radio de base (26),
dans lequel le nœud de gestion mobile (22) est agencé pour déterminer si, oui ou non, un traitement d'attachement du côté de réseau de noyau est omis en fonction d'une notification de réveil, qui indique que la source de puissance du terminal mobile (16, 27) a effectué une transition d'un état de sommeil vers un état de réveil à l'instant d'attachement, ajoutée au signal de demande d'attachement et pour déterminer si, oui ou non, un traitement de détachement du côté de réseau de noyau est omis en fonction d'une notification de sommeil, qui indique qu'une source de puissance du terminal mobile (16, 27) effectue une transition vers un état de sommeil à l'instant de détachement, ajoutée au signal de demande de détachement,
dans lequel, lors de la réception du signal de demande de détachement du terminal mobile (16, 27), et de l'omission du traitement de détachement du côté de réseau de noyau, le nœud de gestion mobile (22) établit, dans un registre d'horloge de maintien de session, un temps plus long d'un temps prédéterminé qu'un intervalle de génération d'une demande de réattachement/redétachement du terminal mobile (16, 27) en tant que temps d'attente pour une libération forcée de la session de communication maintenue, et lorsque le registre d'horloge de maintien de session arrive en fin de comptage sans recevoir le signal de demande d'attachement du terminal mobile (16, 27), le nœud de gestion mobile (22) supprime les informations concernant la session de communication maintenue en faisant en sorte qu'un traitement de détachement habituel du côté de réseau de noyau soit effectué, et libère de force la session de communication.

2. Système de réseau de communication mobile selon la revendication 1, dans lequel un nœud de gestion mobile agencé du côté de réseau de noyau afin d'effectuer une commande de gestion de communication mobile est une entité de gestion de mobilité, MME (22).

3. Procédé de commande de communication utilisé dans un système de réseau de communication mobile comprenant un réseau de noyau auquel un terminal mobile (16, 27) accède, dans lequel
lorsqu'un signal de demande de détachement, qui demande un détachement, est reçu du terminal mobile (16, 27), un nœud de gestion mobile (22), agencé du côté de réseau de noyau afin d'effectuer une commande de gestion de communication mobile, libère des ressources radio entre le terminal mobile (16, 27) et un eNodeB de station radio de base (26), et maintient une session de communication du côté de réseau de noyau établie lorsque le terminal mobile (16, 27) est attaché, et
lorsqu'un signal de demande d'attachement, qui demande un attachement, est reçu du terminal mobile (16, 27) après la réception du signal de demande de détachement, le nœud de gestion mobile utilise la session de communication maintenue du côté de réseau de noyau, et envoie un signal d'acceptation d'attachement d'EMM du formulaire de demande de configuration de contexte S1-AP_Initial à l'eNodeB de station radio de base (26),
dans lequel le nœud de gestion mobile (22) détermine si, oui ou non, un traitement d'attachement du côté de réseau de noyau est omis en fonction d'une notification de réveil, qui indique que la source de puissance du terminal mobile (16, 27) a effectué une transition d'un état de sommeil vers un état de réveil à l'instant d'attachement, ajoutée au signal de demande d'attachement et détermine si, oui ou non, un traitement de détachement du côté de réseau de noyau est omis en fonction d'une notification de sommeil, qui indique qu'une source de puissance du terminal mobile (16, 27) effectue une transition vers un état de sommeil à l'instant de détachement, ajoutée au signal de demande de détachement,
dans lequel, lors de la réception du signal de demande de détachement du terminal mobile (16, 27), et de l'omission du traitement de détachement du côté de réseau de noyau, le nœud de gestion mobile (22) établit un registre d'horloge de maintien de session à un temps plus long d'un temps prédéterminé qu'un intervalle de génération d'une demande de réattachement/redétachement du terminal mobile (16, 27) en tant que temps d'attente pour une libération forcée de la session de communication maintenue, et après cela, lorsque le registre d'horloge de maintien de session arrive en fin de comptage sans avoir reçu le signal de demande d'attachement du terminal mobile (16, 27), le nœud de gestion mobile (22) supprime les informations concernant la session de communication maintenue en faisant en sorte qu'un traitement de détachement habituel du côté de réseau de noyau soit effectué, et libère de force la session de communication.

4. Support non transitoire pouvant être lu par un ordinateur mémorisant un programme de traitement d'attachement/détachement de terminal mobile pour amener un ordinateur prévu au niveau d'un nœud de gestion mobile (22) agencé du côté de réseau de noyau afin d'effectuer une commande de gestion de communication mobile à exécuter le procédé de commande de communication selon la revendication 3.

5. Noeud de gestion mobile (22) installé dans un réseau de noyau, et configuré :
pour effectuer une commande de gestion de communication mobile et pour recevoir un signal de demande de détachement, qui demande un détachement, d'un terminal mobile (16, 27) et un signal de demande d'attachement, qui demande un attachement, du terminal mobile (16, 27), dans lequel
lors de la réception du signal de demande de détachement du terminal mobile (16, 27), le nœud de gestion mobile (22) est agencé pour libérer des ressources radio entre le terminal mobile (16, 27) et un eNodeB de station radio de base (26), tout en maintenant une session de communication établie dans le réseau de noyau,
lors de la réception du signal de demande d'attachement du terminal mobile (16, 27), après la réception du signal de demande de détachement, le nœud de gestion mobile (22) est agencé pour utiliser la session de communication maintenue dans le réseau de noyau et pour envoyer un signal d'acceptation d'attachement d'EMM du formulaire de demande de configuration de contexte S1-AP_Initial à l'eNodeB de station radio de base (26) ; et
dans lequel le nœud de gestion mobile (22) est agencé pour déterminer s'il convient ou non d'omettre un traitement d'attachement dans le réseau de noyau en fonction d'une notification de réveil, qui indique que la source de puissance du terminal mobile (16, 27) a effectué une transition d'un état de sommeil vers un état de réveil à l'instant d'attachement, ajoutée au signal de demande d'attachement et pour déterminer s'il convient ou non d'omettre un traitement de détachement dans le réseau de noyau en fonction d'une notification de sommeil, qui indique que la source de puissance du terminal mobile (16, 27) effectue une transition vers un état de sommeil à l'instant du détachement, ajoutée au signal de demande de détachement,
dans lequel, lors de la réception du signal de demande de détachement du terminal mobile (16, 27), et de l'omission du traitement de détachement du côté de réseau de noyau, le nœud de gestion mobile (22) établit un registre d'horloge de maintien de session à un temps plus long d'un temps prédéterminé qu'un intervalle de génération d'une demande de réattachement/redétachement du terminal mobile (16, 27) en tant que temps d'attente pour une libération forcée de la session de communication maintenue, et lorsque le registre d'horloge de maintien de session arrive en fin de comptage sans avoir reçu le signal de demande d'attachement du terminal mobile (16, 27), le nœud de gestion mobile (22) supprime les informations concernant la session de communication maintenue en faisant en sorte qu'un traitement de détachement habituel du côté de réseau de noyau soit effectué, et libère de force la session de communication.

6. Noeud de gestion mobile selon la revendication 5, dans lequel
le nœud de gestion mobile est une entité de gestion de mobilité, MME (22).

7. Système de réseau de communication mobile comprenant un réseau de noyau auquel un terminal mobile (16, 27) accède, dans lequel
lorsqu'un signal de demande de détachement, qui demande un détachement, est reçu du terminal mobile (16, 27), un nœud de gestion mobile (13), agencé du côté de réseau de noyau afin d'effectuer une commande de gestion de communication mobile, est agencé pour libérer des ressources radio entre le terminal mobile (16, 27) et un RNC de station de commande de ligne radio (15), et pour maintenir une session de communication du côté de réseau de noyau établie lorsque le terminal mobile (16, 27) est attaché, et
lorsqu'un signal de demande d'attachement, qui demande un attachement, est reçu du terminal mobile (16, 27) après la réception du signal de demande de détachement, le nœud de gestion mobile (13) est agencé pour utiliser la session de communication maintenue du côté de réseau de noyau, et pour configurer un support d'accès radio, Radio Access Bearer Setup, entre la station mobile MS (16), le RNC de station de commande de ligne radio (15), et un SGSN à commutation de paquets (1),
dans lequel le nœud de gestion mobile (13) est agencé pour déterminer si, oui ou non, un traitement d'attachement du côté de réseau de noyau est omis en fonction d'une notification de réveil, qui indique que la source de puissance du terminal mobile (16, 27) a effectué une transition d'un état de sommeil vers un état de réveil à l'instant d'attachement, ajoutée au signal de demande d'attachement et pour déterminer si, oui ou non, un traitement de détachement du côté de réseau de noyau est omis en fonction d'une notification de sommeil, qui indique qu'une source de puissance du terminal mobile (16, 27) effectue une transition vers un état de sommeil à l'instant de détachement, ajoutée au signal de demande de détachement,
dans lequel, lors de la réception du signal de demande de détachement du terminal mobile (16, 27), et de l'omission du traitement de détachement du côté de réseau de noyau, le nœud de gestion mobile (13) établit un registre d'horloge de maintien de session à un temps plus long d'un temps prédéterminé qu'un intervalle de génération d'une demande de réattachement/redétachement du terminal mobile (16, 27) en tant que temps d'attente pour une libération forcée de la session de communication maintenue, et lorsque le registre d'horloge de maintien de session arrive en fin de comptage sans avoir reçu le signal de demande d'attachement du terminal mobile (16, 27), le nœud de gestion mobile (13) supprime les informations concernant la session de communication maintenue en faisant en sorte qu'un traitement de détachement habituel du côté de réseau de noyau soit effectué, et libère de force la session de communication.

8. Système de réseau de communication mobile selon la revendication 7, dans lequel
un nœud de gestion mobile agencé du côté de réseau de noyau afin d'effectuer une commande de gestion de communication mobile est un nœud de support, un nœud de support GPRS, Serving General Packet Radio Service, SGSN, à commutation de paquet (13).

9. Procédé de commande de communication utilisé dans un système de réseau de communication mobile comprenant un réseau de noyau auquel un terminal mobile (16, 27) accède, dans lequel
lorsqu'un signal de demande de détachement, qui demande un détachement, est reçu du terminal mobile (16, 27), un nœud de gestion mobile (13), agencé du côté de réseau de noyau afin d'effectuer une commande de gestion de communication mobile, libère des ressources radio entre le terminal mobile (16, 27) et un RNC de station de commande de ligne radio (15), et maintient une session de communication du côté de réseau de noyau établie lorsque le terminal mobile (16, 27) est attaché, et
lorsqu'un signal de demande d'attachement, qui demande un attachement, est reçu du terminal mobile (16, 27) après la réception du signal de demande de détachement, le nœud de gestion mobile utilise la session de communication maintenue du côté de réseau de noyau, et configure un support d'accès de liaison radio de commande, Radio Access Bearer Setup, entre la station mobile MS (16), le RNC de station de commande de ligne radio (15), et un nœud SGSN à commutation de paquets (1),
dans lequel le nœud de gestion mobile (13) détermine si, oui ou non, un traitement d'attachement du côté de réseau de noyau est omis en fonction d'une notification de réveil, qui indique que la source de puissance du terminal mobile (16, 27) a effectué une transition d'un état de sommeil vers un état de réveil à l'instant d'attachement, ajoutée au signal de demande d'attachement et détermine si, oui ou non, un traitement de détachement du côté de réseau de noyau est omis en fonction d'une notification de sommeil, qui indique qu'une source de puissance du terminal mobile (16, 27) effectue une transition vers un état de sommeil à l'instant de détachement, ajoutée au signal de demande de détachement,
dans lequel, lors de la réception du signal de demande de détachement du terminal mobile (16, 27), et de l'omission du traitement de détachement du côté de réseau de noyau, le nœud de gestion mobile (13) établit un registre d'horloge de maintien de session à un temps plus long d'un temps prédéterminé qu'un intervalle de génération d'une demande de réattachement/redétachement du terminal mobile (16, 27) en tant que temps d'attente pour une libération forcée de la session de communication maintenue, et après que cela, lorsque le registre d'horloge de maintien de session arrive en fin de comptage sans avoir reçu le signal de demande d'attachement du terminal mobile (16, 27), le nœud de gestion mobile (13) supprime les informations concernant la session de communication maintenue en faisant en sorte qu'un traitement de détachement habituel du côté de réseau de noyau soit effectué, et libère de force la session de communication.

10. Noeud de gestion mobile (13) installé dans un réseau de noyau d'un système de communication mobile, et configuré :
pour effectuer une commande de gestion de communication mobile et pour recevoir un signal de demande de détachement, qui demande un détachement, d'un terminal mobile (16, 27) et un signal de demande d'attachement, qui demande un attachement, du terminal mobile (16, 27), dans lequel
lors de la réception du signal de demande de détachement du terminal mobile (16, 27), le nœud de gestion mobile (13) est agencé pour libérer des ressources radio entre le terminal mobile (16, 27) et un RNC de station de commande de ligne radio (15), tout en maintenant une session de communication établie dans le réseau de noyau,
lors de la réception du signal de demande d'attachement du terminal mobile (16, 27), après la réception du signal de demande de détachement, le nœud de gestion mobile (13) est agencé pour utiliser la session de communication maintenue dans le réseau de noyau et pour configurer un support d'accès radio, Radio Access Bearer Setup, entre la station mobile MS (16), le RNC de station de commande de ligne radio (15), et un nœud SGSN à commutation de paquets (1) ; et
dans lequel le nœud de gestion mobile (13) est agencé pour déterminer s'il convient ou non d'omettre un traitement d'attachement dans le réseau de noyau en fonction d'une notification de réveil, qui indique que la source de puissance du terminal mobile (16, 27) a effectué une transition d'un état de sommeil vers un état de réveil à l'instant d'attachement, ajoutée au signal de demande d'attachement et pour déterminer s'il convient ou non d'omettre un traitement de détachement dans le réseau de noyau en fonction d'une notification de sommeil, qui indique que la source de puissance du terminal mobile (16, 27) effectue une transition vers un état de sommeil à l'instant de détachement, ajoutée au signal de demande de détachement,
dans lequel, lors de la réception du signal de demande de détachement du terminal mobile (16, 27), et de l'omission du traitement de détachement du côté de réseau de noyau, le nœud de gestion mobile (13) établit un registre d'horloge de maintien de session à un temps plus long d'un temps prédéterminé qu'un intervalle de génération d'une demande de réattachement/redétachement du terminal mobile (16, 27) en tant que temps d'attente pour une libération forcée de la session de communication maintenue, et lorsque le registre d'horloge de maintien de session arrive en fin de comptage sans avoir reçu le signal de demande d'attachement du terminal mobile (16, 27), le nœud de gestion mobile (13) supprime les informations concernant la session de communication maintenue en faisant en sorte qu'un traitement de détachement habituel du côté de réseau de noyau soit effectué, et libère de force la session de communication.

11. Noeud de gestion mobile selon la revendication 10, dans lequel le nœud de gestion mobile est un nœud de support GPRS desservant, SGSN (13).
